# EUROPEAN PATENT SPECIFICATION

(11) **EP 4 121 302 B1**
(45) Date of publication and mention of the grant of the patent: **04.11.2026**
(21) Application number: 21710064.3
(22) Date of filing: 04.03.2021
(51) Int. Cl.: B60C 1/00, C08K 9/04, C08L 15/00, C08K 3/36

(54) **RUBBER COMPOSITION, RUBBER PRODUCT AND TYRE**
KAUTSCHUKZUSAMMENSETZUNG, KAUTSCHUKPRODUKT UND REIFEN
COMPOSITION DE CAOUTCHOUC, PRODUIT DE CAOUTCHOUC ET PNEUMATIQUE

(30) Priority: 16.03.2020 WO PCT/IB2020/052386
(43) Date of publication of application: 25.01.2023
(73) Proprietor: Bridgestone Europe NV/SA, 1930 Zaventem (BE)
(72) Inventor: AURISICCHIO, Claudia, 00128 Roma (IT); CALZETTA, Alessandra, 00128 Roma (IT); DI RONZA, Raffaele, 00128 Roma (IT)
(74) Representative: Marchetti, Alessio
(86) International application number: PCT/IB2021/051806
(87) International publication number: WO 2021/186280

(56) References cited:
- US-A1- 2016 075 809
- US-A1- 2017 044 020
- US-B1- 6 365 668

## Description

### Field of the Invention:

The present invention provides rubber compositions suitable for tyre manufacture, which comprise a functionalised polymer and a functionalised silica. The present invention additionally provides rubber products and tyres made from these rubber compositions.

### Background:

A demand for vehicles with lower fuel consumption is growing with the global movement towards the reduction of carbon dioxide emissions. To respond to this demand, lower rolling resistance is required of tyres. From the standpoint of improving automobile driving safety, it is also important to ensure grip performance on wet road surfaces (wet performance) is maximised. Wear resistance and toughness are additional factors that are important to improve in tyre manufacture. Tyre manufacturers may modify the components of the rubber compositions from which their tyres are prepared in order to affect these properties. Functionalised polymers known in the art include those disclosed in WO 2014/173706 A1 and US 6365668 B1 . Functionalised fillers, such as those disclosed in WO 2015/121333 A1, are additionally known.

When developing a rubber composition for a tyre tread to improve the rolling resistance of the tyre, it is typically effective to consider the loss tangent (tanδ) near 60° C as an index. Specifically, using a rubber composition with a low tanδ near 60° C in the tread rubber can suppress heat build-up in the tyre to reduce the rolling resistance, thereby improving the fuel efficiency of the tyre, as in JP 2012-92179 A. Similarly, JP 2014-9324 A discloses a technique for improving the wet performance in a rubber composition for tyre treads. Wear resistance and toughness may also be measured by techniques known in the art. Together, the wet performance, rolling resistance and wear resistance are known as the magic triangle of viscoelastic properties. There is a desire in the art to provide tyres in which all of these properties are improved.

### Summary of Invention:

The present inventors have unexpectedly discovered that by providing a rubber composition comprising a polymer functionalised with one or more carboxyl groups and a silica functionalised with one or more carboxyl groups, tyres made from the rubber compositions have excellent wear resistance, rolling resistance, wet performance and toughness and outstanding balance between these properties. In particular, an interactive and/or synergistic effect is observed on the viscoelastic properties of rubber products prepared from rubber compositions comprising both a functionalised polymer and a functionalised silica.

A first aspect of the present invention provides a rubber composition comprising:
a rubber component comprising an end-group functionalised solution-polymerised styrene-butadiene (SSBR) copolymer, wherein the end-group functionalised SSBR copolymer comprises terminal carboxyl groups; and,
a functionalised silica, wherein the functionalised silica is a silica functionalised with one or more carboxyl groups, the functionalised silica having:
   - a BET specific surface area of from 250 to 310 m²/g;
   - a CTAB specific surface area of from 230 to 285 m²/g
   - a carbon content (C) of at least 0.10% by weight of the functionalised silica;
   - an object size distribution width ratio (Ld) of at least 0.91; and,
   - a pore volume distribution ratio of at least 0.65.

The end-group functionalised solution-polymerised styrene-butadiene (SSBR) copolymer may comprise terminal silane-containing carboxyl groups of the Formula (I): 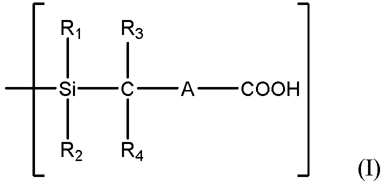 wherein:
R₁ and R₂ are the same or different and each independently a hydrogen, alkyl, alkoxy, cycloalkyl, cycloalkoxy, aryl, aryloxy, alkylaryl, alkylaryloxy, aralkyl, or aralkoxy radical, which may contain one or more heteroatoms, preferably wherein the heteroatoms are one or more selected from the group consisting of O, N, S, and Si;
   R₃ and R₄ are the same or different and each independently a hydrogen, alkyl, cycloalkyl, aryl, alkaryl, or aralkyl radical, which may contain one or more heteroatoms, preferably wherein the heteroatoms are one or more selected from the group consisting of O, N, S, and Si; and,
A is a divalent organic radical, which may be an alkyl radical; one or more heteroatoms selected from the group consisting of O, NR₇, S and SiR₈R₉; or, an alkyl radical containing one or more heteroatoms, preferably wherein the heteroatoms are one or more selected from the group consisting of O, NR₇, S, and SiR₈R₉.

The silane-containing carboxyl group may be present as a carboxylate of the Formula (II): 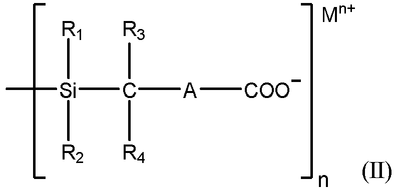 wherein:
R₁ and R₂ are as defined above for Formula (I);
R₃ and R₄ are as defined above for Formula (I); and,
   A is as defined above for Formula (I); and,
M is a metal or semi-metal of valency 1 to 4, preferably Li, Na, K, Mg, Ca, Zn, Fe, Co, Ni, Al, Nd, Ti, Sn, Si, Zr, V, Mo or W.
n is an integer from 1 to 4.

The end-group functionalised SSBR copolymer may be obtainable by reaction of an SSBR copolymer with one or more functionalising reagents in the form of silalactones. For example, the silalactones may be compounds of the Formula (III): 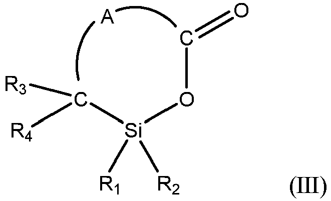 wherein
R₁ and R₂ are as defined above for Formula (I);
R₃ and R₄ are as defined above for Formula (I); and,
A is as defined above for Formula (I).

The silane-containing carboxyl group may be bonded to the SSBR copolymer via one or more divalent structural elements of the Formula (V): 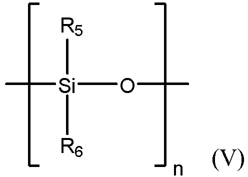 wherein
n is an integer from 3 to 6;
R₅, R₆ are the same or different and are each independently a hydrogen, alkyl, cycloalkyl, aryl, alkaryl, or aralkyl radical;
which may contain one or more heteroatoms, preferably wherein the heteroatoms are one or more selected from the group consisting of O, N, S or Si.

The divalent structural elements of Formula (V) may be derived from cyclosiloxanes. For example, from cyclosiloxanes of the Formula (IV): 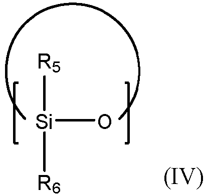 wherein
n is an integer from 3 to 6;
R₅, R₆ are the same or different and are each independently a hydrogen, alkyl, cycloalkyl, aryl, alkaryl, or aralkyl radical;
which may contain one or more heteroatoms, preferably wherein the heteroatoms are one or more selected from the group consisting of O, N, S or Si, more preferably wherein the divalent structural elements of Formula (V) may be derived from one or more cyclosiloxanes selected from the group consisting of hexamethylcyclotrisiloxane, octamethylcyclotetrasiloxane, decamethylcyclopentasiloxane and dodecamethylcyclohexasiloxane.

The functionalised silica may comprise a silica functionalised at its surface with one or more carboxyl groups. The carboxyl groups may be present as carboxylic acids and/or as a carboxylate salts.

The carboxyl groups of the functionalised silica may be derived from one or more carboxylic acids, for example one or more polycarboxylic acids. The one or more polycarboxylic acids may contain two, three, four, or more than four carboxyl groups. Preferably, the one or more polycarboxylic acids may be one or more selected from the group consisting of adipic acid, succinic acid, ethylsuccinic acid, glutaric acid, methylglutaric acid, oxalic acid, and citric acid.

The carboxyl groups of the functionalised silica may be derived by reacting a silica with the one or more carboxylic acids to form the functionalised silica.

The functionalised silica has a Brunauer-Emmett-Teller (BET) specific surface area of from 250 to 310 m²/g. The Brunauer-Emmett-Teller (BET) specific surface area may preferably be from 270 to 300 m²/g, more preferably from 280 to 290 m²/g.

The functionalised silica has a surface area by cetyltrimethylammonium bromide (CTAB) adsorption of 230 m²/g to 285 m²/g. The surface area by cetyltrimethylammonium bromide (CTAB) adsorption may preferably be from 240 m²/g to 270 m²/g, more preferably 245 m²/g to 265 m²/g, more preferably from 250 m²/g to 260 m²/g.

The functionalised silica has a carbon content of at least 0.10% by weight of the functionalised silica. The carbon content may preferably be at least 0.15% by weight, more preferably at least 0.20% by weight, more preferably at least 0.25% by weight, more preferably at least 0.30% by weight of the functionalised silica.

The functionalised silica has an object size distribution width ratio Ld of at least 0.91. The object size distribution width ratio Ld is preferably at least 0.94.

The functionalised silica has a pore volume distribution ratio of at least 0.65. The pore volume distribution is preferably at least 0.66, more preferably at least 0.68

The functionalised silica may have a pH of from 2.5 to 7, preferably from 2.5 to 5, more preferably from 3 to 4.5.

The ratio of the amount of the functionalised silica in parts by weight based on 100 parts by weight of the rubber component to the amount of the end-group functionalised SSBR copolymer in parts by weight based on 100 parts by weight of the rubber component may be from 0.5:1 to 2:1, preferably from 0.75:1 to 1.50:1, preferably from 0.9:1 to 1.40:1, more preferably from 0.95:1 to 1.30:1.

The rubber composition may comprise:
10.5 to 100 parts by weight based on 100 parts by weight of the rubber component of the end-group functionalised SSBR copolymer; and,
20 to 200 parts by weight based on 100 parts by weight of the rubber component of the functionalised silica.

The rubber composition may preferably comprise:
40 to 90 parts by weight based on 100 parts by weight of the rubber component of the end-group functionalised SSBR copolymer; and,
50 to 100 parts by weight based on 100 parts by weight of the rubber component of the functionalised silica.

The rubber composition may preferably comprise:
50 to 80 parts by weight based on 100 parts by weight of the rubber component of the end-group functionalised SSBR copolymer; and,
65 to 85 parts by weight based on 100 parts by weight of the rubber component of the functionalised silica.

The rubber composition may preferably comprise:
55 to 75 parts by weight based on 100 parts by weight of the rubber component of the end-group functionalised SSBR copolymer; and,
70 to 75 parts by weight based on 100 parts by weight of the rubber component of the functionalised silica.

In a particular embodiment, the rubber composition may comprise:
60 parts by weight based on 100 parts by weight of the rubber component of the end-group functionalised SSBR copolymer; and,
72 parts by weight based on 100 parts by weight of the rubber component of the functionalised silica.

In a particular embodiment, the rubber composition may comprise:
70 parts by weight based on 100 parts by weight of the rubber component of the end-group functionalised SSBR copolymer; and,
72 parts by weight based on 100 parts by weight of the rubber component of the functionalised silica.

In a particular embodiment, the rubber composition may comprise:
70 parts by weight based on 100 parts by weight of the rubber component of the end-group functionalised SSBR copolymer; and,
80 parts by weight based on 100 parts by weight of the rubber component of the functionalised silica.

The rubber composition of the present invention may be compounded.

A second aspect of the present invention relates to a rubber product comprising the rubber composition of the present invention, wherein the rubber composition is vulcanised.

A third aspect of the present invention relates to a tyre comprising the rubber composition of the present invention or the rubber product of the present invention.

### Detailed Description:

According to an aspect, the present invention provides a rubber composition comprising:
a rubber component comprising an end-group functionalised solution-polymerised styrene-butadiene (SSBR) copolymer, wherein the end group functionalised SSBR copolymer comprises terminal carboxyl groups; and,
a functionalised silica, wherein the functionalised silica is a silica functionalised with one or more carboxyl groups, the functionalised silica having:
   - a BET specific surface area of between 250 and 310 m²/g;
   - a CTAB specific surface area of between 230 and 285 m²/g
   - a carbon content of at least 0.10% by weight of the functionalised silica;
   - an object size distribution width ratio Ld of at least 0.91; and,
   - a pore volume distribution ratio of least 0.65.

The rubber compositions of the present invention offer a number of advantages compared to rubber compositions known in the art. In particular, tyres produced from rubber compositions of the present invention have excellent wet performance, rolling resistance, wear resistance and toughness and outstanding balance between these properties. The combination of the end-group functionalised SSBR copolymer and the functionalised silica has an interactive and/or synergistic impact on the properties of the rubber compositions and gives rise to the advantageous properties of tyres discussed above. Specifically, an interaction between the end-group functionalised SSBR copolymer and functionalised silica, which may be synergistic, leads to an unprecedented level of dispersion of the fillers (in particular, the functionalised silica filler) in the rubber compositions and rubber products of the present invention. This unprecedented dispersion has a positive impact on each of the wet performance, rolling resistance, wear resistance and toughness of tyres produced from the rubber compositions and provides an outstanding balance between these properties.

The End-Group Functionalised Solution-Polymerised Styrene-Butadiene (SSBR) Copolymer

The end-group functionalised SSBR copolymer may comprise an SSBR copolymer terminated by silane-containing carboxyl groups of the Formula (I): 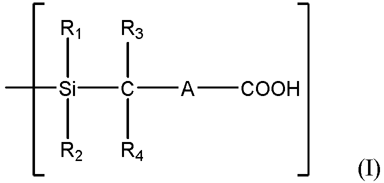 wherein:
R₁ and R₂ are the same or different and each independently a hydrogen, alkyl, alkoxy, cycloalkyl, cycloalkoxy, aryl, aryloxy, alkylaryl, alkylaryloxy, aralkyl, or aralkoxy radical, which may contain one or more heteroatoms, preferably wherein the heteroatoms are one or more selected from the group consisting of O, N, S, and Si;
   R₃ and R₄ are the same or different and each independently a hydrogen, alkyl, cycloalkyl, aryl, alkaryl, or aralkyl radical, which may contain one or more heteroatoms, preferably wherein the heteroatoms are one or more selected from the group consisting of O, N, S, and Si; and,
A is a divalent organic radical, which may be an alkyl radical; one or more heteroatoms selected from the group consisting of O, NR₇, S and SiR₈R₉; or, an alkyl radical containing one or more heteroatoms, preferably wherein the heteroatoms are one or more selected from the group consisting of O, NR₇, S, and SiR₈R₉.

The end-group functionalised SSBR copolymer may comprise an SSBR copolymer terminated by a silane-containing carboxyl group of the Formula (I), wherein R₁ and R₂ are each independently a hydrogen, C₁ to C₁₂ linear or branched alkyl, C₂ to C₁₂ linear or branched alkenyl, C₁ to C₁₂ linear or branched alkoxy, C₃ to C₁₂ cycloalkyl, C₂ to C₁₂ cycloalkoxy, C₆ to C₁₂ aryl, C₆ to C₁₂ aryloxy, C₇ to C₁₄ arylalkyl, C₇ to C₁₄ alkylaryl, C₆ to C₂₄ alkylaryloxy, C₅ to C₂₄ aralkyl, or a C₆ to C₂₄ aralkoxy radical. Preferably, R₁ and R₂ may each independently be a C₁ to C₆ linear or branched alkyl, C₂ to C₆ linear or branched alkenyl, C₁ to C₆ linear or branched alkoxy, C₃ to C₁₂ cycloalkyl, C₂ to C₁₂ cycloalkoxy, or a C₆ to C₁₂ aryl radical. Preferably, R₁ and R₂ may each independently be a C₁ to C₆ linear or branched alkyl, C₂ to C₆ linear or branched alkenyl, C₁ to C₆ linear or branched alkoxy, or a C₆ to C₁₂ aryl radical. Preferably, R₁ and R₂ may each independently be a C₁ to C₃ linear or branched alkyl, C₂ to C₃ linear or branched alkenyl, C₁ to C₃ linear or branched alkoxy, or a C₆ aryl radical. For example, R₁ and R₂ may each independently be a methyl, tert-butyl, prop-1-enyl, ethoxy, or phenyl radical. More preferably, R₁ and R₂ are methyl radicals.

R₃ and R₄ may each independently be a hydrogen, C₁ to C₁₂ linear or branched alkyl, C₃ to C₁₂ cycloalkyl, C₆ to C₁₂ aryl, C₅ to C₂₄ aralkyl, or a C₅ to C₂₄ alkaryl radical. Preferably R₃ and R₄ may each independently be a hydrogen, C₁ to C₆ linear or branched alkyl, C₂ to C₆ linear or branched alkenyl, C₁ to C₆ linear or branched alkoxy, or a C₆ to C₁₂ aryl radical. More preferably, R₃ and R₄ may each independently be a hydrogen or methyl radical. In a particular embodiment, R₃/R₄ and A together form a C₆ aryl.

A may independently be a substituted or unsubstituted C₁ to C₆ linear alkyl radical; one or more heteroatoms selected from the group consisting of O, NR₇, S and SiR₈R₉; or, a substituted or unsubstituted C₁ to C₆ linear alkyl radical containing one or more heteroatoms selected from the group consisting of O, NR₇, S, and SiR₈R₉. Preferably, A may independently be a substituted or unsubstituted C₁ to C₃ linear alkyl radical; one or more heteroatoms selected from the group consisting of O, NR₇, S and SiR₈R₉; or, a substituted or unsubstituted C₁ to C₃ linear alkyl radical containing one or more heteroatoms selected from the group consisting of O, NR₇, S, and SiR₈R₉. Where A is substituted, it may be substituted with one or more selected from the group consisting of a C₁ to C₆ linear alkyl radical, and a C₆ to C₁₂ aryl radical. Preferably, A may be substituted with a C₁ to C₃ linear alkyl radical or a C₆ aryl radical. More preferably, A may be substituted with a C₁ radical. R₇ may be hydrogen, C₁ to C₆ linear alkyl, for example methyl, or trimethylsilyl. R₈ and R₉ may independently be C₁ to C₆ linear alkyl, for example methyl. Preferably, A is a C₂ alkyl radical containing an S atom. The structure of A as a C₂ alkyl radical containing an S atom is presented below.

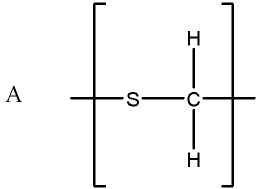

The silane-containing carboxyl group may be present as a carboxylate of the Formula (II): 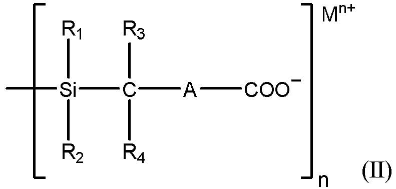 wherein:
R₁ and R₂ are as defined above for Formula (I);
   R₃ and R₄ are as defined above for Formula (I); and,
A is as defined above for Formula (I); and,
   M is a metal or semi-metal of valency 1 to 4, for example, Li, Na, K, Mg, Ca, Zn, Fe, Co, Ni, Al, Nd, Ti, Sn, Si, Zr, V, Mo or W.
n is an integer from 1 to 4.

In the compounds of Formula (II), M may be Li and n may be 1.

The further definitions of R₁, R₂, R₃, R₄, R₇, R₈ and R₉ in Formula (II) are the same as those above for Formula (I).

The end-group functionalised SSBR copolymer may be obtainable by reaction of the SSBR copolymer with one or more functionalising reagents in the form of silalactones. The silalactones may be compounds of the Formula (III) 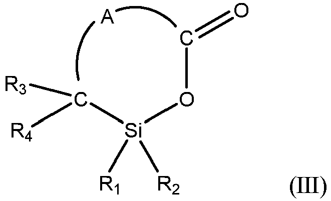 wherein
R₁ and R₂ are as defined above for Formula (I);
   R₃ and R₄ are as defined above for Formula (I); and,
A is as defined above for Formula (I).

The further definitions of R₁, R₂, R₃, R₄, R₇, R₈ and R₉ in Formula (III) are as described above for Formula (I).

Advantageously, the silalactones of Formula (III) may be one or more selected from the group consisting of 2,2-dimethyl-1-oxa-2-silacyclohexan-6-one, 2,2,4-trimethyl-I-oxa-2-silacyclohexan-6-one, 2,2,5-trimethyl-1-oxa-2-silacyclohexan-6-one, 2,2,4,5-tetramethyl-1-oxa-2-silacyclohexan-6-one, 2,2-diethyl-1-oxa-2-silacyclohexan-8-one, 2,2-diethoxy-1-oxa-2-silacyclohexan-6-one, 2,2-dimethyl-1,4-dioxa-2-silacyclohexan-6-one, 2,2,5-trimethyl-1,4-dioxa-2-silacyclohexan-6-one, 2,2,3,3-tetramethyl-1,4-dioxa-2-silacyclohexan-6-one, 2,2-dimethyl-1-oxa-4-thia-2-silacyclohexan-6-one, 2,2-diethyl-1-oxa-4-thia-2-silacyclohexan-6-one, 2,2-diphenyl-1-oxa-4-thia-2-silacyclonexan-6-one, 2-methyl-2-ethenyl-1-oxa-4-thia-2-silacyclohexan-6-one, 2,2,5-trimethyl-1-oxa-4-thia-2-silacyclohexan-6-one, 2,2-dimethyl-1-oxa-4-aza-2-silacyclohexan-6-one, 2,2,4-trimethyl-1-oxa-4-aza-2-silacyclohexan-6-one, 2,4-dimethyl-2-phenyl-1-oxa-4-aza-2-silacyclohexan-6-one, 22-dimethyl-4-trimethylsilyl-1-oxa-4-aza-2-silacyclohexan-8-one, 2,2-diethoxy-4-methyl-1-oxa-4-aza-2-silacyclohexan-6-one, 2,2,4,4-tetramethyl-1-oxa-2,4-disilacyclohexan-8-one, 3,4-dihydro-3,3-dimethyl-1H-2,3-benzoxasilin-1-one, 2,2-dimethyl-1-oxa-2-silacyclopentan-5-one, 2,2,3-trimethyl-1-oxa-2-silacyclopenten-5-one, 2,2-dimethyl-4-phenyl-1-oxa-2-silacyclopentan-5-one, 2,2,4-(tert-butyl)-1-oxa-2-silacyclopentan-5-one, 2-methyl-2-(2-propen-1-yl)-1-oxa-2-silacyclopentan-5-one, 1,1-dimethyl-2,1-benzoxasilol-3(1H)-one, 2,2-dimethyl-1-oxa-2-silacycloheptan-7-one. Preferably, the silalactone of Formula (III) is 2,2-dimethyl-1-oxa-4-thia-2-silacyclohexan-6-one. The structure of 2,2-dimethyl-1-oxa-4-thia-2-silacyclohexan-6-one is presented below.

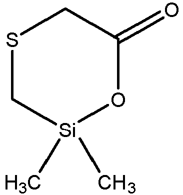

The silane-containing carboxyl group may be bonded to the SSBR copolymer via one or more divalent structural elements of the Formula (V): 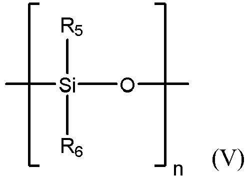 wherein
n is an integer from 3 to 6;
R₅, R₆ are the same or different and are each independently a hydrogen, alkyl, cycloalkyl, aryl, alkaryl, or aralkyl radical;
which may contain one or more heteroatoms, preferably wherein the heteroatoms are one or more selected from the group consisting of O, N, S or Si

When the divalent structural element is present, the SSBR copolymer is bonded at the silicon end of the divalent structural element according to the below:

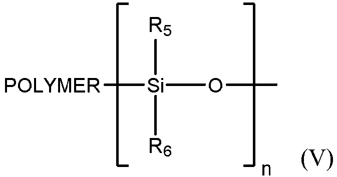

The silane-containing carboxyl group of Formula (I) or (II) is bonded at the oxygen end of the divalent structural element of Formula (V), when the divalent structural element is present.

The divalent structural elements of the Formula (V) may be derived from cyclosiloxanes, such as cyclosiloxanes of the Formula (IV): 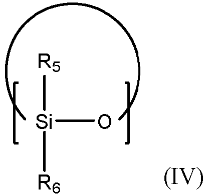 wherein
n is as defined above for Formula (V);
R₅, R₆ are as defined above for Formula (V).

R₅ and R₆ may each independently a hydrogen, C₁ to C₁₂ linear or branched alkyl, C₃ to C₁₂ cycloalkyl, C₆ to C₁₂ aryl, C₇ to C₁₄ aralkyl, or a C₇ to C₁₄ alkaryl radical. Preferably, R₅ and R₆ may each independently be a C₁ to C₆ linear or branched alkyl, preferably, C₁ to C₃ linear alkyl, more preferably a methyl radical.

The divalent structural elements of the Formula (V) may be derived from one or more selected from the group consisting of hexamethylcyclotrisiloxane, octamethylcyclotetrasiloxane, decamethylcyclopentasiloxane and dodecamethylcyclohexasiloxane. Preferably, the divalent structural element is derived from hexamethylcyclotrisiloxane.

It is particularly advantageous for the end-group functionalised SSBR copolymer to be terminated with silane-containing carboxyl groups derived from 2,2-dimethyl-1-oxa-4-thia-2-silacyclohexan-6-one that is bonded to the polymer via a divalent structural element derived from hexamethylcyclotrisiloxane.

The end-group functionalised SSBR copolymer may have a styrene content of from 10% to 30% by weight of the end-group functionalised SSBR copolymer, preferably 15% to 25% by weight, more preferably 20% to 22% by weight, for example 20%, 21%, or 22% by weight. The end-group functionalised SSBR copolymer may have a vinyl content of 50% to 75% by weight of the end-group functionalised SSBR copolymer, preferably, 50% to 65%, more preferably 60% to 65%, for example 60%, 61%, 62%, 63%, 64%, or 65% by weight of the end-group functionalised SSBR copolymer.

The end-group functionalised SSBR copolymer may have mean molar masses (number-average, Mn) of 10,000 to 2,000,000 g/mol, preferably 100,000 to 1,000,000 g/mol.

The end-group functionalised SSBR copolymer may have a glass transition temperatures of -110° C to +20° C, preferably -60° C to 0° C, preferably -40° C to -10° C, preferably -30° C to -15° C, more preferably -22° C to -26° C, for example -22° C, -23° C, -24° C, -25° C, or -26° C.

The end-group functionalised SSBR copolymer may have a Mooney viscosity [ML 1+4 (100° C)] of 10 to 200 Mooney units, for example 30 to 150 Mooney units, 40 to 90 Mooney units, 50 to 60 Mooney units, for example 50, 51, 52, 53, 54, 55, 56, 57, 58, 59, 60 Mooney units.

The end-group functionalised SSBR copolymer may be extended with an extender oil such that the extended end-group functionalised SSBR copolymer comprises from 1% to 10% extender oil, preferably 2.5% to 7.5%, more preferably 5% extender oil. The extender oil may be one or more selected from the group consisting of DAE (Distillate Aromatic Extract), Tdae (Treated Distillate Aromatic Extract), MES (Mild extraction solvate), RAE (Residual Aromatic Extract), Trae (Treated Residual Aromatic Extract), naphthenic oil, heavy naphthenic oils, paraffin oils, vegetable oils such as coconut oil, synthetic oils such as alkylbenzene oils and castor oils. Preferably, the end-group functionalised SSBR copolymer is extended with an aromatic oil, such as Treated Distillate Aromatic Extract oil (Tdae) such that the extended end-group functionalised SSBR copolymer comprises 5% Treated Distillate Aromatic Extract oil.

The synthesis of SSBR copolymers terminated with carboxyl groups and the compounds of Formulae (I) to (V) above is discussed in detail in, for example, Intemational patent application number WO 2014/173706 A1.

### The Functionalised Silica

The functionalised silica is a silica functionalised with one or more carboxyl groups, the functionalised silica having:
- a BET specific surface area of between 250 and 310 m²/g;
- a CTAB specific surface area of between 230 and 285 m²/g
- a carbon content of at least 0.10% by weight of the functionalised silica;
- an object size distribution width ratio Ld of at least 0.91; and,
- a pore volume distribution ratio of at least 0.65.

The synthesis of the functionalised silicas is discussed in detail in International patent application number WO 2015/121333 A1. However, generally, the preparation of functionalised silica is performed by a precipitation reaction of a silicate, such as an alkali metal silicate (for example sodium silicate), with an acidifying agent (for example sulfuric acid), then separation by filtration, with production of a filter cake of the precipitated silica obtained, followed by liquefaction said filter cake and, finally, drying (generally by atomization). The silica can be precipitated in any mode: in particular, addition of acidifying agent to a silicate feedstock or total or partial simultaneous addition of acidifying agent and of silicate to a feedstock of water or of silicate. One or more polycarboxylic acids are added to the filter cake, either during the liquefaction operation, or after the liquefaction operation and before the drying step.

The functionalised silica may comprise a silica functionalised at its surface with one or more carboxyl groups. The carboxyl groups may be present as carboxylic acids and/or as a carboxylate salts. The carboxyl groups may comprise a polycarboxylic acid containing two, three, four or more than four carboxylic acid functional groups. The polycarboxylic acid may be a dicarboxylic acid or tricarboxylic acid. The polycarboxylic acid may be a linear or branched, saturated or unsaturated, aliphatic polycarboxylic acid containing from 2 to 20 carbon atoms or an aromatic polycarboxylic acid. The polycarboxylic acid may comprise hydroxyl groups and/or halogen atoms. The aliphatic polycarboxylic acid may comprise heteroatoms on the main chain, for example N or S. The polycarboxylic acid may be one or more selected from the group consisting of linear, branched, saturated, unsaturated, aliphatic polycarboxylic acids containing from 2 to 16 carbon atoms and aromatic polycarboxylic acids.

The aliphatic polycarboxylic acids may be made of linear, saturated or unsaturated polycarboxylic acids containing from 2 to 14 carbon atoms, for example from 2 to 12 carbon atoms. The polycarboxylic acid may contain 2, 3, 4, 5, 6, 7, 8, 9, 10, 11 or 12 carbon atoms.

Advantageously, the polycarboxylic acid may contain 4, 5, 6, 7, 8, 9 or 10 carbon atoms, for example 4, 5, 6, 7 or 8 carbon atoms. The polycarboxylic acid may contain 4, 5 or 6 carbon atoms.

The polycarboxylic acid may be one or more selected from the group consisting of oxalic acid, malonic acid, tricarballylic acid, succinic acid, glutaric acid, adipic acid, pimelic acid, suberic acid, azelaic acid, sebacic acid, methylsuccinic acid, ethylsuccinic acid, methyladipic acid, methylglutaric acid, dimethylglutaric acid, malic acid, citric acid, isocitric acid and tartaric acid. Preferably, the polycarboxylic acid is one or more selected from the group consisting of adipic acid, succinic acid, ethylsuccinic acid, glutaric acid, methylglutaric acid, oxalic acid, and citric acid.

The functionalised silica has a Brunauer-Emmett-Teller (BET) specific surface area of from 250 to 310 m²/g. The Brunauer-Emmett-Teller (BET) specific surface area is preferably from 270 to 300 m²/g, more preferably 280 to 290 m²/g, for example 280, 281, 282, 283, 284, 285, 286, 287, 288, 289, or 290 m²/g.

The functionalised silica has a surface area by cetyltrimethylammonium bromide (CTAB) adsorption of from 230 m²/g to 285 m²/g. The surface area by cetyltrimethylammonium bromide (CTAB) adsorption may preferably be from 240 m²/g to 270 m²/g, more preferably from 245 m²/g to 265 m²/g, more preferably from 250 m²/g to 260 m²/g , for example, 250, 251, 252, 253, 254, 255, 256, 257, 258, 259, or 260 m²/g.

The functionalised silica may have a pH of from 2.5 to 7, preferably from 2.5 to 5, more preferably from 3 to 4.5, for example, 3.0, 3.1, 3.2, 3.3, 3.4, 3.5, 3.6, 3.7, 3.8, 3.9, 4.0, 4.1, 4.2, 4.3, 4.4, or 4.5.

The functionalised silica has a carbon content of at least 0.10% by weight of the functionalised silica. The carbon content (denoted (C)) is the carbon content of carboxylic acid plus corresponding carboxylate, expressed as total carbon. The carbon content may preferably be at least 0.15% by weight, more preferably at least 0.20% by weight, more preferably at least 0.25% by weight, more preferably at least 0.30% by weight of the functionalised silica.

The functionalised silica has an object size distribution width ratio Ld of at least 0.91. The object size distribution width ratio Ld is preferably at least 0.94. As used herein, object size distribution width ratio is the object size distribution width ratio (Ld), measured by X-Ray Disc Centrifuge (XDC) particle size analysis, after ultrasound deagglomeration (in water), and corresponds to the ratio (d84-d16)/d50, in which dn is the size for which n% of particles (by mass) are smaller than this size (the distribution width Ld is thus calculated on the cumulative particle size curve, taken in its entirety). The size distribution width Ld of objects smaller than 500 nm, measured by XDC particle size analysis, after ultrasound deagglomeration (in water), corresponds to the ratio (d84-d16)/d50 in which dn is the size for which n% of particles (by mass), relative to the particles smaller than 500 nm, are smaller than this size (the distribution width Ld is thus calculated on the cumulative particle size curve, truncated above 500 nm). Object size distribution width as used herein is measured according to the method described in WO 2015/121333 A1.

The functionalised silica has a pore volume distribution ratio of at least 0.65. The pore volume distribution is preferably at least 0.66, more preferably at least 0.68. Pore volumes and pore diameters are measured by mercury (Hg) porosimetry using a Micromeritics Autopore 9520 porosimeter and are calculated by the Washburn relationship with a contact angle theta equal to 140° and a gamma surface tension equal to 484 dynes/cm (standard DIN 66133). The preparation of each sample is performed as follows: each sample is predried in an oven at 200° C for 2 hours. As used herein, pore volume distribution ratio is the pore volume distribution such that the ratio V(d5 - d50)/V(d5 - d100) is at least 0.65, preferably at least 0.66, more preferably at least 0.68. V(d5 - d50) represents the pore volume consisting of pores between d5 and d50 in diameter, and V(d5 - d100) represents the pore volume consisting of pores between d5 and d100 in diameter, dn being here the pore diameter for which n% of the total surface area of all the pores is provided by the pores with a diameter greater than this diameter (the total surface area of the pores (S₀) may be determined from the mercury intrusion curve). Pore volume distribution ratio as used herein is measured according to the method described in WO 2015/121333 A1.

The amount of the end-group functionalised SSBR copolymer and the functionalised silica and the amounts of these two components relative to each other in the rubber compositions can have an advantageous effect on the properties of the rubber compositions of the present invention and tyres made therefrom.

The amount of the end-group functionalised SSBR copolymer may be from 10.5 to 100 by weight based on 100 parts by weight of the rubber component, preferably, 40 to 90 parts by weight, preferably 50 to 80 parts by weight, more preferably 55 to 75 parts by weight, for example 55, 56, 57, 58, 59, 60, 61, 62, 63, 64, 65, 66, 67, 68, 69, 70, 71, 72, 73, 74, 75 parts by weight based on 100 parts by weight of the rubber component. In specific examples, the amount of the end-group functionalised SSBR copolymer may be 60 parts by weight or 70 parts by weight based on 100 parts by weight of the rubber component.

The amount of the functionalised silica may be from 20 to 200 parts by weight based on 100 parts by weight of the rubber component, preferably 50 to 100 parts by weight, preferably 65 to 85 parts by weight, more preferably 70 to 75 parts by weight, for example, 70, 71, 72, 73, 74, 75 parts by weight based on 100 parts by weight of the rubber component. In specific examples, the amount of the functionalised silica may be 72 parts by weight based on 100 parts by weight of the rubber component.

As mentioned above, the amounts of the end-group functionalised SSBR copolymer and the functionalised silica relative to each other in the rubber compositions can have an advantageous effect on the properties of the rubber compositions and tyres made therefrom. The ratio of the amount of the functionalised silica to the end-group functionalised SSBR copolymer in parts by weight based on 100 parts by weight of the rubber component may be from 0.5:1 to 2:1, preferably from 0.75:1 to 1.50:1, preferably from 0.9:1 to 1.40:1, more preferably from 0.95:1 to 1.30:1 for example 0.95, 0.96, 0.97, 0.98, 0.99, 1.00, 1.01, 1.02, 1.03, 1.04, 1.05, 1.06, 1.07, 1.08, 1.09, 1.10, 1.11, 1.12, 1.13, 1.14, 1.15, 1.16, 1.17, 1.18, 1.19, 1.20, 1.21, 1.22, 1.23, 1.24, 1.25, 1.26, 1.27, 1.28, 1.29, or 1.30:1. Tyres produced from rubber compositions having these relative amounts of the functionalised silica and end-group functionalised SSBR copolymer have excellent wet performance, rolling resistance, wear resistance and toughness and improved balance between these properties compared to compositions where either or both of the end-group functionalised SSBR copolymer and functionalised silica are absent.

When the amount of the functionalised silica in parts by weight based on 100 parts by weight of the rubber component is greater than the amount of the end-group functionalised SSBR copolymer in parts by weight based on 100 parts by weight of the rubber component, tyres produced from the rubber compositions exhibit particularly improved wear resistance as well as excellent rolling resistance, wet performance and toughness and outstanding balance between these properties when compared to tyres produced from compositions where the relative amounts of these components is different or compared to compositions where either or both of the end-group functionalised SSBR copolymer and functionalised silica are absent. In other words, these improved properties are achieved when the ratio of the amount of the functionalised silica to the end-group functionalised SSBR copolymer in parts by weight based on 100 parts by weight of the rubber component is greater than 1:1, preferably, 1.01:1 to 1.50:1, 1.01:1 to 1.40:1, or 1.01:1 to 1.30:1, for example 1.01, 1.02, 1.03, 1.04, 1.05, 1.06, 1.07, 1.08, 1.09, 1.10, 1.11, 1.12, 1.13, 1.14, 1.15, 1.16, 1.17, 1.18, 1.19, 1.20 , 1.21, 1.22, 1.23, 1.24, 1.25, 1.26, 1.27, 1.28, 1.29, or 1.30:1.

According to a further aspect, the present invention provides a rubber composition comprising: 58 to 73 parts by weight based on 100 parts by weight of the rubber component of a functionalised polymer, wherein the functionalised polymer is a polymer functionalised with one or more carboxyl groups; and,
70 to 75 parts by weight based on 100 parts by weight of the rubber component of a functionalised silica, wherein the functionalised silica is a silica functionalised with one or more carboxyl groups, the functionalised silica having:
   - a BET specific surface area of from 250 to 310 m²/g;
   - a CTAB specific surface area of from 230 to 285 m²/g
   - a carbon content of at least 0.10% by weight of the functionalised silica;
   - an object size distribution width ratio (Ld) of at least 0.91; and,
   - a pore volume distribution ratio of at least 0.65;
wherein the ratio of the amount of the functionalised silica to the amount of the functionalised polymer in parts by weight based on 100 parts by weight of the rubber component is 1.01:1 to 1.30:1; and,
wherein the pH of the functionalised silica is from 3.5 to 4.5.

It has additionally been discovered that higher amounts of the functionalised silica can, in particular, improve the wear resistance properties of tyres produced from rubber compositions of the present invention. For example, tyres made from rubber compositions comprising the functionalised silica in an amount of 75 or more parts by weight, for example, 75 to 200 parts by weight, 75 to 150 parts by weight, 75 to 100 parts by weight, or 75 to 85 parts by weight, for example 80 parts by weight, based on 100 parts by weight of the rubber component have outstanding wear resistance properties. In particular, including the higher amounts of the functionalised silica discussed above in rubber compositions wherein the amount of the functionalised silica is greater than the amount of the end-group functionalised SSBR copolymer as discussed above results in extremely good wear resistance properties.

The present invention additionally provides a rubber composition comprising:
68 to 72 parts by weight based on 100 parts by weight of the rubber component of an end-group functionalised solution-polymerised styrene-butadiene (SSBR) copolymer, wherein the end group comprises one or more carboxyl groups; and,
77.5 to 82.5 parts by weight based on 100 parts by weight of the rubber component of a functionalised silica, wherein the functionalised silica is a silica functionalised with one or more carboxyl groups, the functionalised silica having:
   - a BET specific surface area of from 250 to 310 m²/g;
   - a CTAB specific surface area of from 230 to 285 m²/g
   - a carbon content of at least 0.10% by weight of the functionalised silica;
   - an object size distribution width ratio (Ld) of at least 0.91; and,
   - a pore volume distribution ratio of at least 0.65;
wherein the ratio of the amount of the functionalised silica to the amount of the end-group functionalised SSBR copolymer in parts by weight based on 100 parts by weight of the rubber component is 1.01:1 to 1.15:1; and,
wherein the pH of the functionalised silica is from 3 to 4.5.

### Further Components

In addition to the end-group functionalised SSBR copolymer and functionalised silica, the rubber compositions of the present invention may contain further components. These further components may include one or more selected from the group consisting of additional polymers (which are different to the end-group functionalised SSBR copolymers discussed above), vulcanising agents, vulcanisation accelerators, vulcanisation accelerator auxiliaries, fillers, silane coupling agents, antidegradation agents, such as antioxidants or antiozonants, waxes, and oils. For example, the compositions of the present invention may further comprise an additional polymer, a vulcanising agent, a vulcanising accelerator, a vulcanisation accelerator auxiliary, a carbon black, a silane coupling agent, an antidegradant, a wax, and an oil.

The additional polymer of the rubber compositions is not particularly limited (other than in that it is different to the end-group functionalised SSBR copolymers discussed above) and may be any of those known to the person skilled in the art. The additional polymer may comprise a diene polymer and/or a diene copolymer obtainable by copolymerisation of diene monomers with vinylaromatic monomers. For example, the additional polymer may comprise one or more selected from the group consisting of polybutadiene, polyisoprene, butadiene-isoprene copolymer, styrene-butadiene copolymer, isoprene-styrene copolymer, or butadiene-isoprene-styrene terpolymer. Preferably, the additional polymer is a solution-polymerised styrene-butadiene copolymer, for example BUNA^{®} VSL 3038-2HM by Arlanxeo. The additional polymer may be oil-extended. The extender oil may be one or more selected from the group consisting of DAE (Distillate Aromatic Extract), Tdae (Treated Distillate Aromatic Extract), MES (Mild extraction solvate), RAE (Residual Aromatic Extract), Trae (Treated Residual Aromatic Extract), naphthenic oil, heavy naphthenic oils, paraffin oils, vegetable oils such as coconut oil, synthetic oils such as alkylbenzene oils and castor oils. Preferably, the extender oil is an aromatic oil, such as Treated Distillate Aromatic Extract (Tdae). The amount of oil present in the additional polymer may vary from 20% to 40% of the total quantity of the oil extended additional polymer, for example 27.3%. The amount of the additional polymer is not particularly limited, but may be from 0 to 89.5 parts by weight based on 100 parts by weight of the rubber component, preferably 10 to 60 parts by weight, preferably 20 to 50 parts by weight, more preferably 25 to 45 parts by weight, for example 25, 26, 27, 28, 29, 30, 31, 32, 33, 34, 35, 36, 37, 38, 39, 40, 41, 42, 43, 44 or 45, parts by weight based on 100 parts by weight of the rubber component.

The vulcanising agent of the rubber compositions of present invention is not particularly limited and may be any of those known to the person skilled in the art. For example, the vulcanising agent may be sulfur. The amount of the vulcanising agent that the rubber compositions of the present invention comprises is not particularly limited, but may be from 0.1 to 5 parts by weight based on 100 parts by weight of the rubber component. For example, the rubber composition may comprise from 0.1 to 2 parts by weight, preferably 0.1 to 1 parts by weight, more preferably from 0.5 to 1 parts by weight, for example, 0.5, 0.6, 0.7, 0.8, 0.9 or 1 parts by weight based on 100 parts by weight of the rubber component.

The vulcanisation accelerator of the rubber compositions of present invention is not particularly limited and may be any of those known to the person skilled in the art. For example, the vulcanisation accelerator may be one or more selected from the group consisting of a thiazole type vulcanization accelerator such as 2-mercaptobenzothiazole (MBT), dibenzothiazyl disulfide (MBTS), N-cyclohexyl-2-benzothiazyl sulfenamide (CBS), and N-tert-butyl-2-benzothiazolyl sulfenamide (TBBS); a guanidine type vulcanization accelerator such as 1,3-diphenyl guanidine (DPG); a thiuram-based vulcanization accelerator such as tetramethyl thiuram disulphide, tetrabutyl thiuram disulfide, tetradodecyl thiuram disulfide, tetraoctyl thiuram disulfide, and tetrabenzyl thiuram disulfide; and dithiocarbamate compounds such as dimethyl dithiocarbamate zinc; and other dialkyl dithiophosphoric acid zinc. Preferably, the vulcanisation accelerator may be a combination of dibenzothiazyl disulfide (MBTS), N-cyclohexyl-2-benzothiazyl sulfenamide (CBS), and 1,3-diphenyl guanidine (DPG). The total amount of the vulcanisation accelerator is not particularly limited, but may be from 0.2 to 10 parts by weight based on 100 parts by weight of the rubber component, preferably from 0.5 to 8 parts by weight, preferably from 1 to 5 parts by weight, more preferably from 2 to 4 parts by weight, for example 2, 2.1, 2.2, 2.3, 2.4, 2.5, 2.6, 2.7, 2.8, 2.9, 3, 3.1, 3.2, 3.3, 3.4, 3.5, 3.6, 3.7, 3.8, 3.9 or 4 parts by weight based on 100 parts by weight of the rubber component. The amount of each vulcanisation accelerator may be from 0.1 to 5 parts by weight based on 100 parts by weight of the rubber component, preferably from 0.5 to 3 parts by weight, more preferably from 0.75 to 2 parts by weight, for example 0.8, 0.9, 1, 1.1, 1.2, 1.3, 1.4, 1.5, 1.6, 1.7, 1.8, 1.9, or 2 parts by weight based on 100 parts by weight of the rubber component. Preferably, the vulcanisation accelerator of the rubber compositions of the present invention may comprise dibenzothiazyl disulfide (MBTS) in an amount from 1 to 2 parts by weight, N-cyclohexyl-2-benzothiazyl sulfenamide (CBS) in the amount 0.75 parts by weight, and 1,3-diphenyl guanidine (DPG) in the amount 1.3 parts by weight based on 100 parts by weight of the rubber component.

The vulcanisation accelerator auxiliary of the present invention is not particularly limited and may be any of those known to the person skilled in the art. For example, the vulcanisation accelerator auxiliary may be zinc oxide (ZnO) and a fatty acid. The fatty acid may be any of saturated or unsaturated, or linear or branched fatty acid. The number of carbon atoms of the fatty acid is also not particularly limited, but may be from 1 to 30, or from 15 to 30. For example, the fatty acid may be one or more selected from the group consisting of cyclohexanoic acids (cyclohexane carboxylic acid), naphthenic acids having a side chain such as alkyl cyclopentane, saturated fatty acids such as hexanoic acid, octanoic acid, decanoic acid (including branched carboxylic acids such as neodecanoic acid), dodecanoic acid, tetradecanoic acid, hexadecanoic acid, and octadecanoic acid (stearic acid), unsaturated fatty acids such as methacrylic acid, oleic acid, linolic acid and linolenic acid, and resin acids such as rosin, tall oil acid and abietic acid. Preferably the vulcanisation accelerator auxiliary of the present invention is zinc oxide (ZnO) and stearic acid. The total amount of the vulcanisation accelerator auxiliary is not particularly limited, but may be from 1 to 10 parts by weight based on 100 parts by weight of the rubber component, for example 1.5 to 7 parts by weight, or 2 to 5 parts by weight, for example, 2, 2.5, 3, 3.5, 4, 4.5, or 5 parts. Preferably, zinc oxide (ZnO) is present in an amount of 2 parts by weight and stearic acid is present in an amount of 1.5 parts by weight based on 100 parts by weight of the rubber component.

The carbon black of the rubber compositions of the present invention is not particularly limited and may be any of those known to the person skilled in the art. The carbon black may be furnace black, channel blacks, and lamp blacks. For example, the carbon black may be one or more selected from the group consisting of super abrasion furnace (SAF) blacks, high abrasion furnace (HAF) blacks, fast extrusion furnace (FEF) blacks, fine furnace (FF) blacks, intermediate super abrasion furnace (ISAF) blacks, semi-reinforcing furnace (SRF) blacks, medium processing channel blacks, hard processing channel blacks and conducting channel blacks. Other carbon blacks which may be used include acetylene blacks. The carbon black may be in pelletized form or an unpelletized flocculent mass. A specific example of the carbon black in the rubber compositions of the present invention is CORAX^{®} N234 by Orion Engineered Carbons. The amount of carbon black that the rubber compositions of the present invention comprises is not particularly limited, but may be from 0.1 to 10 parts by weight of the rubber component, for example from 0.5 to 5 parts by weight, or from 1 to 4 parts by weight, for example, 1, 2, 3, or 4 parts by weight based on 100 parts by weight of the rubber component. Preferably, the carbon black is present at 2 to 3 parts by weight based on 100 parts by weight of the rubber component.

Advantageously, the only silica-based filler that the rubber compositions of the present invention comprises is the functionalised silica discussed above. In other words, no additional silica may be present. However, the presence of additional silica-based fillers is not necessarily precluded from the present invention. Additional silica-based fillers may include any of those known to the person skilled in the art (not including the functionalised silica discussed above) including precipitated amorphous silica, wet silica (hydrated silicic acid), dry silica (anhydrous silicic acid), fumed silica, calcium silicate, aluminum silicate, magnesium silicate (e.g., Mg₂SiO₄, MgSiO₃), magnesium calcium silicate (CaMgSiO₄), aluminum calcium silicate (e.g., Al₂O₃.CaO₂SiO₂).

The rubber composition may comprise additional fillers known to the person skilled in the art. For example, the rubber compositions of the present invention may comprise one or more selected from the group consisting of aluminum hydroxide, talc, alumina (Al₂O₃), aluminum hydrate (Al₂O₃H₂O), aluminum hydroxide (Al(OH)₃), aluminum carbonate (Al₂(CO₃)₂), aluminum magnesium oxide (MgOAl₂O₃), pyrofilite (Al₂O₃.4SiO₂.H₂O), bentonite (Al₂O₃.4SiO₂.2H₂O), mica, kaolin, glass balloon, glass beads, calcium oxide (CaO), calcium hydroxide (Ca(OH)₂), calcium carbonate (CaCO₃), magnesium carbonate, magnesium hydroxide (Mg(OH)₂), magnesium oxide (MgO), magnesium carbonate (MgCO₃), potassium titanate, barium sulfate, zirconium oxide (ZrO₂), zirconium hydroxide [Zr(OH)₂.nH₂O], zirconium carbonate [Zr(CO₃)₂], crystalline aluminosilicates, reinforcing grades of zinc oxide (i.e., reinforcing zinc oxide). The amount of the further fillers may be from 5 to 200 parts by weight based on 100 parts by weight of the rubber component, for example, 10 to 150 parts by weight, or 25 to 100 parts by weight based on 100 parts by weight of the rubber component.

The silane coupling agent of the rubber compositions of the present invention is not particularly limited and may be any of those known to the person skilled in the art. For example, the silane coupling agent of the present invention may be one or more selected from the group consisting of bis(3-triethoxysilylpropyl) tetrasulfide, bis(3-triethoxysilylpropyl) trisulfide, bis(3-triethoxysilylpropyl) disulfide, bis(2-triethoxysilylethyl) tetrasulfide, bis(3-trimethoxysilylpropyl) tetrasulfide, bis(2-trimethoxysilylethyl) tetrasulfide, 3-mercaptopropyltrimethoxysilane, 3-mercaptopropyltriethoxysilane, 2-mercaptoethyltrimethoxysilane, 2-mercaptoethyltriethoxysilane, 3-trimethoxysilylpropyl-N,N-dimethylthiocarbamoyl tetrasulfide, 3-triethoxysilylpropyl-N,N-dimethylthiocarbamoyl tetrasulfide, 2-triethoxysilylethyl-N,N-dimethylthiocarbamoyl tetrasulfide, 3-trimethoxysilylpropylbenzothiazolyl tetrasulfide, 3-triethoxysilylpropylbenzothiazolyl tetrasulfide, 3-triethoxysilylpropylmethacrylate monosulfide, 3-trimethoxysilylpropylmethacrylate monosulfide, bis(3-diethoxymethylsilylpropyl) tetrasulfide, 3-mercaptopropyldimethoxymethylsilane, dimethoxymethylsilylpropyl-N,N-dimethylthiocarbamoyl tetrasulfide, and dimethoxymethylsilylpropylbenzothiazolyl tetrasulfide. Preferably, the silane coupling agent is bis(3-triethoxysilylpropyl) tetrasulfide. A specific example of the silane coupling agent is Si 69^{®} from Evonik Industries AG. The amount of the silane coupling agent is not particularly limited, but may be from 2 to 20 parts by weight based on 100 parts by weight of the rubber component, preferably from 5 to 15 parts by weight, preferably from 7 to 13 parts by weight, more preferably from 9 to 12 parts by weight, for example 9, 9.1, 9.2, 10.3, 9.4, 9.5, 9.6, 9.,7, 9.8, 9.9, 10, 10.1, 10.2, 10.3, 10.4, 10.5, 10.6, 10.7, 10.8, 10.9, 11, 11.1, 11.2, 11.3, 11.4, 11.5, 11.6, 11.7, 11.8, 11.9, or 12 parts by weight based on 100 parts by weight of the rubber component.

The oil of the rubber compositions of the present invention is not particularly limited and may be any of those known to the person skilled in the art. For example, the oil of the present invention may be one or more selected from the group consisting of processed oils such as aromatics oil, such as DAE (Distillate Aromatic Extract) -, Tdae (Treated Distillate Aromatic Extract) -, MES (Mild extraction solvate) -, RAE (Residual Aromatic Extract) -, Trae (Treated Residual Aromatic Extract) -, naphthenic and heavy naphthenic oils, paraffin oils, vegetable oils such as coconut oil, synthetic oils such as alkylbenzene oils and castor oils. Preferably, the oil is an aromatic oil, such as a residual aromatic extract oil. The oil of the rubber composition may be added in the rubber composition in the form of a polymer extender present in one or more polymers (e.g. the functionalised or non-functionalised SSBR co-polymers).

The total amount of oil in the rubber composition is calculated by the sum of the extender oil present in the one or more polymers and any additional oil components that may be present. The total amount of oil is not particularly limited but may be from 5 to 60 parts by weight based on 100 parts by weight of the rubber component, preferably from 8 to 50 parts by weight, preferably from 10 to 45 parts by weight, more preferably from 15 to 40 parts by weight, for example, 15, 16, 17, 18, 19, 20, 21, 22, 23, 24, 25, 26, 27, 28, 29 or 30 parts by weight based on 100 parts by weight of the rubber component.

The antidegradant of the rubber compositions of the present invention is not particularly limited and may be any of those known to the person skilled in the art. The antidegradant may be an antioxidant and/or and antiozonant. For example, the antidegradant may be one or more selected from the group consisting of N-(1,3-Dimethylbutyl)-N'-phenyl-p-phenylenediamine (6PPD) and 2,2,4-Trimethyl-1,2-Dihydroquinoline polymer (TMQ). Preferably, the antidegradant is a combination of N-(1,3-Dimethylbutyl)-N'-phenyl-p-phenylenediamine (6PPD) and 2,2,4-Trimethyl-1,2-Dihydroquinoline polymer (TMQ). The amount of each antidegradant may be from 0.1 to 3 parts by weight based on 100 parts by weight of the rubber component, for example, from 0.5 to 1.5 parts by weight, for example, 0.5, 0.6, 0.7, 0.8, 0.9, 1.0 parts by weight based on 100 parts by weight of the rubber component. The total amount of antidegradant may be from 0.1 to 10 parts by weight based on 100 parts by weight of the rubber component, preferably from 0.1 to 5 parts by weight, preferably from 0.5 to 3 parts by weight, more preferably from 1 to 2 parts by weight, for example, 1.1, 1.2, 1.3, 1.4, 1.5, 1.6, 1.7, 1.8, 1.9, or 2 parts by weight based on 100 parts by weight of the rubber component.

According to a further aspect, the present invention provides a method of producing a rubber compound by compounding the rubber composition of the present invention.

According to a further aspect, the present invention provides a method of producing a rubber product comprising the steps of: compounding the rubber composition of the present invention to form a rubber compound; forming the rubber compound into a desired shape; and, vulcanising the rubber compound.

### Rubber composition production and compounding

In preparing the rubber composition of the present invention, the method for combining each of the components is not limited and any of the methods known to the person skilled in the art may be used. For example, all of the component materials may be blended and kneaded at once or they may be blending and kneaded in multiple steps. For blending and kneading, a kneader such as roll kneader, internal mixer or Banbury mixer may be used. For moulding the rubber composition into sheet or strip shape, any known moulding machine such as extrusion moulding machine or press moulding machine may be used.

### Vulcanisation

The vulcanization conditions for hardening the above rubber composition are not limited and can be any of those known to the person skilled in the art. Typically, however, vulcanization conditions of treatment at 140 to 180° C for 5 to 120 minutes are employed.

### Tyre Production

The tyre of the present invention is not specifically limited, except in that it is made using the rubber composition of the present invention, and may be appropriately selected depending on the intended purpose. Because the tyre is made using the rubber compositions of the present invention, it has excellent wear resistance, rolling resistance, wet performance and toughness and outstanding balance between these properties.

The part of the tyre in which the rubber composition of the present invention is used is not specifically limited and may be appropriately selected depending on the intended purpose. For example, the rubber composition may be used in the tread, base treads, side walls, side-reinforcing rubbers, bead fillers, etc. Among these, the rubber composition is advantageously used in the tread component.

Regarding the method for producing the tyre, any method known to those skilled in the art can be used. For example, components generally used in tyre production, such as a carcass layer, a belt layer, a tread layer and the like formed of at least one selected from the group consisting of an unvulcanised rubber composition and a cord are layered in order on a drum for tyre formation and then the drum is removed to give a green tyre. Next, the green tyre is vulcanised under heat according to an ordinary method to produce a desired tyre. The tyre may be, for example, a pneumatic tyre.

### Examples:

The invention will now be illustrated by means of the following examples, which are intended to explain the invention and in no way limit its scope.

### Test Methods

*Brunauer-Emmett-Teller (BET) specific surface area* - The specific surface area of the functionalised silica was measured by the BET method according to the method described in the Journal of the American Chemical Society, Vol. 60, page 309, February 1938, and corresponding to standard NF ISO 5794-1, Appendix D (June 2010).

*Cetyltrimethylammonium bromide (CTAB) adsorption method -* The surface area of the functionalised silica was measured by the CTAB method according to ASTM D6845.

*Carbon content (C) of carboxylic acid plus corresponding carboxylate* - The content of carboxylic acid plus corresponding carboxylate, denoted (C), expressed as total carbon, may be measured using a carbon/sulfur analyser, such as the Horiba EMIA 320 V2 machine. The principle of the carbon/sulfur analyser is based on the combustion of a solid sample in a stream of oxygen in an induction furnace (adjusted to approximately 170 mA) and in the presence of combustion accelerators (approximately 2 g of tungsten (in particular Lecocel 763-266) and approximately 1 g of iron). The analysis lasts approximately 1 minute. The carbon present in the sample to be analysed (mass of approximately 0.2 g) combines with the oxygen to form CO₂ and CO. These decomposition gases are subsequently analysed by an infrared detector. The moisture from the sample and the water produced during these oxidation reactions is removed by passing through a cartridge comprising a dehydrating agent (magnesium perchlorate) so as not to interfere with the infrared measurement. The result is expressed as a mass percentage of element carbon.

*Object size distribution width ratio Ld* - The object size distribution width ratio is the object size distribution width ratio Ld ((d84 - d16)/d50), measured by XDC particle size analysis after ultrasound deagglomeration according to the method described in WO 2015/121333 A1.

*Pore volume distribution* - The pore volume distribution is the pore volume distribution ratio V(d5 - d50)/V(d5 - d100) measured according to the method described in WO 2015/121333 A1.

*Functionalised silica pH* - the pH of the functionalised silica was measured according to the method described in WO 2015/121333 A1, which is derived from ISO 787/9.

*Mooney viscosity -* Mooney viscosity was measured on the raw functionalised or non-functionalised polymer according to the ASTM D1646 Standard.

*Rolling Resistance (RR)* - Rolling resistance was measured according to United Nations Regulation No. 117, Revision 4, 2016, Annex 6.

*Wet Performance* - Wet performance was measured according to United Nations Regulation No. 117, Revision 4, 2016, Annex 5.

*Toughness (TB*EB)* - The toughness measurement was based on the tensile properties of the compound according to International Organisation for Standardization (ISO) 5893 measured at 100° C.

*Payne Effect* (%) - The Payne Effect has been calculated from the compound dynamic properties measured according to the ISO 4664 standard, in the stress/strain test at room temperature. The Payne Effect can predict the filler dispersion in the rubber composition from the ratio (expressed in percentage) between ΔE'/E(0.1%strain), wherein the ΔE' is the difference between the E'(0.1%strain) - E'(4%strain). The lower the Payne Effect, the better the filler dispersion in the rubber composition. In Table 2 below, the Payne Effect data is presented relative to Comparative Example 1, for which the Payne Effect has been normalised to 100. A Payne Effect value of greater than 100 indicates that filler dispersion is improved compared to Comparative Example 1.

### End-group functionalised SSBR copolymer

In the following examples, the end-group functionalised SSBR copolymer was prepared according to Example 3 of WO 2014/173706 A1, as described below.

An inertized 20 litre reactor was charged with hexane (8.5 kg), 1,3-butadiene (1,185 g), styrene (315 g), 2,2-bis(2-tetrahydrofuryl)propane (8.6 mmol) and butyllithium (11.3 mmol), and the contents were heated to 60° C. Polymerization was effected while stirring at 60° C for 25 minutes. Subsequently, an amount of hexamethylcyclotrisiloxane equimolar to that of butyllithium was added (as a solution in cyclohexane) and the reactor contents were then heated to 60° C for a further 20 minutes to cap the anionic ends of the polymer chains. 20 minutes after addition of the hexamethylcyclotrisiloxane, an amount of 2,2-dimethyl-1-oxa-4-thia-2-silacyclohexan-6-one equimolar to that of butyllithium and hexamethylcyclotrisiloxane was added (as a solution in toluene) and the mixture was heated to 60° C for a further 20 minutes. The rubber solution was discharged and stabilized by addition of Irganox^{®} 1520 (2,4-bis(octylthiomethyl)-6-methylphenol) (3 g), and the solvent was removed by stripping with steam. The rubber crumbs were dried at 65° C under reduced pressure.

### Functionalised silica

In the following examples, the functionalised silicas were prepared according to Example 6 in WO 2015/121333 A1, wherein the amount of methylglutaric acid (MGA) added was 0.40 wt% (expressed as MGA mixture/SiO₂ weight ratio) and the pH was adjusted to be between 3 and 3.7 for functionalised silica A, and the amount MGA added was 0.40 wt% (expressed as MGA mixture/SiO₂ weight ratio) and pH was adjusted to be between 3.5 and 4.2 for functionalised silica B.

The properties of Functionalised silica A and Functionalised silica B are shown in Table 1 below.

**Table 1**

| **Property** | **Functionalised silica A** | **Functionalised silica B** |
|---|---|---|
| BET surface area (m²/g) | 286 | 288 |
| CTAB surface area (m²/g) | 253 | 254 |
| pH | 3.7 | 4.1 |
| Carbon content | 0.15 | 0.15 |
| Object size distribution width ratio (Ld) | 1.11 | 1.36 |
| Pore volume distribution ratio | 0.71 | 0.71 |

### Rubber compositions

Tables 2 and 3 below show the rubber compositions of Examples 1 to 4 and Comparative Examples 1 to 3. The rubber compositions were prepared by compounding the components listed in Tables 2 and 3. Table 2 shows the polymer and silica components of the rubber compositions, while Table 3 shows the further components. The values given in Tables 2 and 3 are parts by weight based on 100 parts by weight of the rubber component (PHR). The amounts of the polymer components given in Table 2 (i.e. the amounts of non-functionalised SSBR, hydroxyl-functionalised SSBR and end-group functionalised SSBR copolymer) include the percentage amount of extender oil that is recited in the description of each polymer in column 2 of Table 2. That is, to calculate the amount of pure SSBR co-polymer present in the composition by weight based on 100 parts by weight of the rubber component, the value given in Table 2 should be adjusted to account for the percentage amount of extender oil present. The rubber compositions were subjected to the testing methods described above.

Table 2 additionally shows the viscoelastic properties of tyres prepared from the rubber compositions Examples 1 to 4 and Comparative Examples 1 to 3. The results are presented relative to Comparative Example 1, for which all the values of the listed viscoelastic properties have been normalised to 100. Therefore, if the value of the viscoelastic property is greater than 100, an improvement in that property is indicated and, if the value of the viscoelastic property is less than 100, a reduction in that viscoelastic property is indicated. Where the value of the viscoelastic property is 100, then the result was the same as that for Comparative Example 1.

The "Balance" figure is the sum of the values of the viscoelastic properties for each composition minus 400. As the value of each of the four viscoelastic properties of Comparative Example 1 have been set at 100, the Balance of Comparative Example 1 is 0. A Balance of greater than 0 therefore indicates an improvement in the overall viscoelastic properties compared to Comparative Example 1.

The "Notes" summarise the characteristics of the polymer and silica components of each rubber composition.

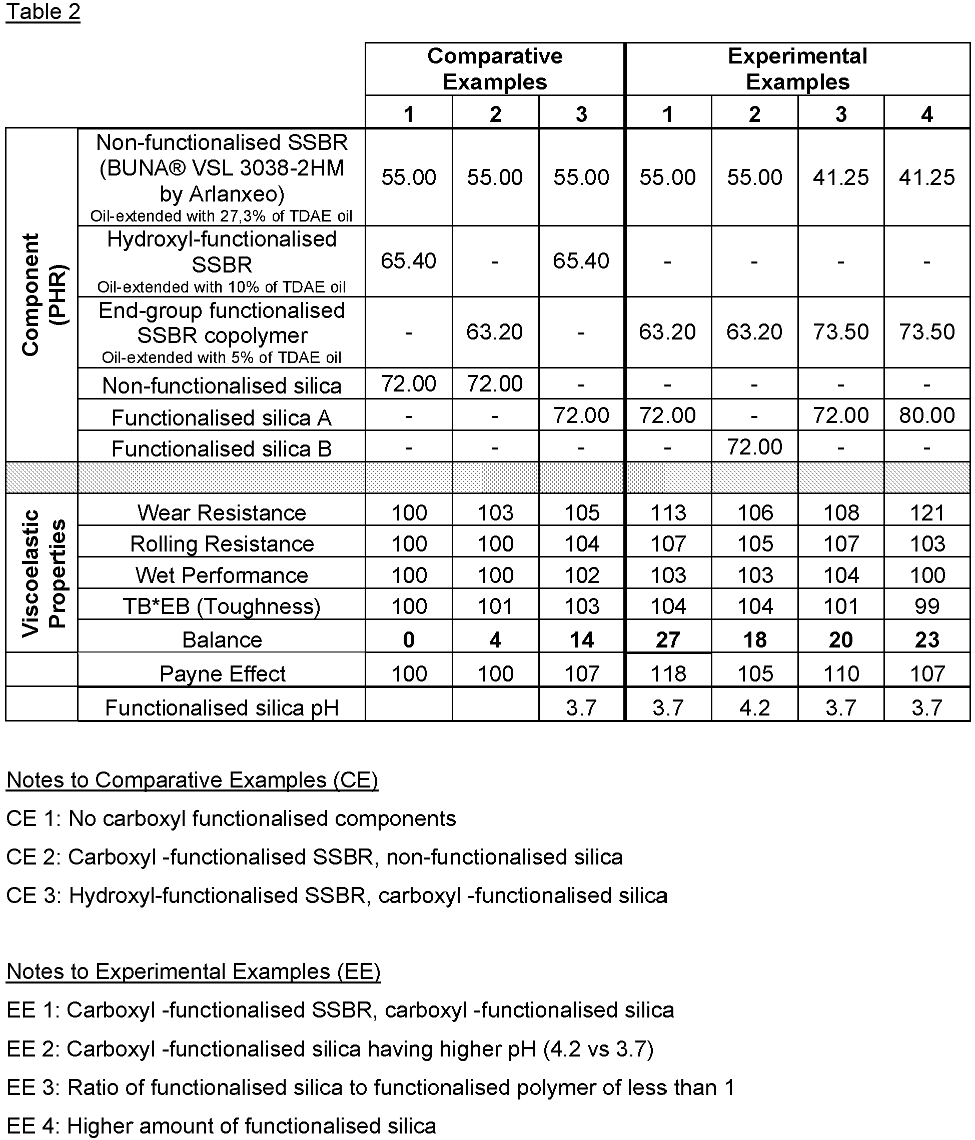

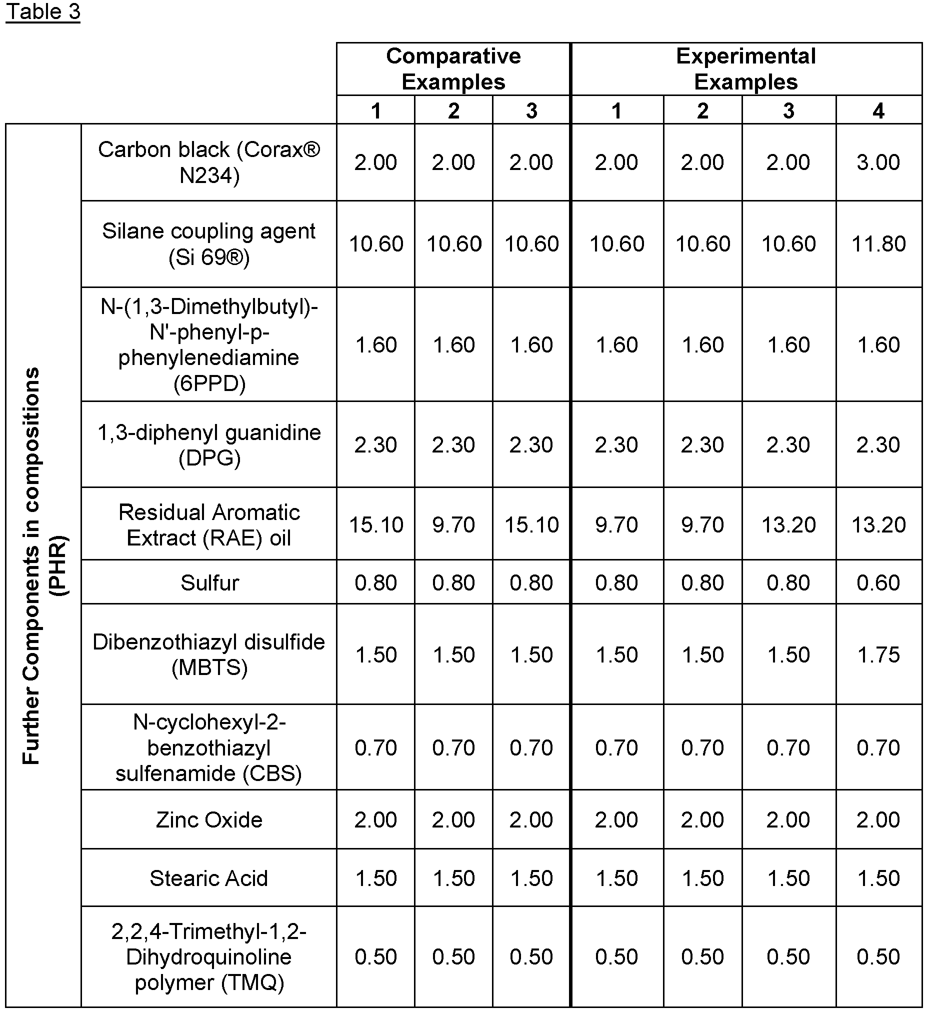

### Results and Discussion:

The Balance data for Experimental Examples 1 to 4 is significantly higher than that of Comparative Examples 1 to 3, demonstrating an overall improvement in the viscoelastic properties of tyres prepared from compositions comprising both the end-group functionalised SSBR and the functionalised silica. Additionally, an interactive and/or synergistic effect is achieved by combining the end-group functionalised SSBR and the functionalised silica.

Comparing Comparative Example 3 with Experimental Examples 1 to 4, an improvement in the overall viscoelastic properties, in particular wear and rolling resistance, is achieved when the end-group functionalised SSBR is used when compared to a hydroxyl-functionalised polymer.

A comparison of Experimental Example 1 with Experimental Example 2 demonstrates that an improvement in the overall viscoelastic properties, in particular wear and rolling resistance, is achieved when the pH is 3.7 compared to 4.2.

As can be seen from a comparison of Experimental Example 1 with Experimental Example 3, an improvement in the overall viscoelastic properties, in particular wear and toughness, is achieved when the amount of the functionalised silica is greater than the amount of the end-group functionalised SSBR.

As can be seen from Experimental Example 4, a higher amount of the functionalised silica significantly improves the wear properties.

## Claims

1. A rubber composition comprising:
a rubber component comprising an end-group functionalised solution-polymerised styrene-butadiene (SSBR) copolymer, wherein the end-group functionalised SSBR copolymer comprises terminal carboxyl groups; and,
a functionalised silica, wherein the functionalised silica is a silica functionalised with one or more carboxyl groups, the functionalised silica having:
- a BET specific surface area measured according to the method disclosed in the description of from 250 to 310 m²/g;
- a CTAB specific surface area measured according to ASTM D6845 of from 230 to 285 m²/g
- a carbon content of at least 0.10% by weight of the functionalised silica;
- an object size distribution width ratio (Ld) of at least 0.91,
wherein said object size distribution width ratio (Ld) is measured according to the method disclosed in the description and corresponds to the ratio (d84-d16)/d50, in which dn is the size for which n% of particles are smaller than this size; and,
- a pore volume distribution ratio of at least 0.65,
wherein said pore volume distribution ratio is measured according to the method disclosed in the description and is the ratio V(d5 - d50)/V(d5 - d100), wherein V(d5 - d50) represents the pore volume consisting of pores between d5 and d50 in diameter, and V(d5 - d100) represents the pore volume consisting of pores between d5 and d100 in diameter, dn being here the pore diameter for which n% of the total surface area of all the pores is provided by the pores with a diameter greater than this diameter.

2. The rubber composition according to claim 1, wherein the end-group functionalised SSBR copolymer comprises terminal silane-containing carboxyl groups of the Formula (I): 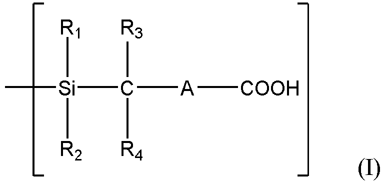 wherein:
R₁ and R₂ are the same or different and each independently a hydrogen, alkyl, alkoxy, cycloalkyl, cycloalkoxy, aryl, aryloxy, alkylaryl, alkylaryloxy, aralkyl, or aralkoxy radical, which may contain one or more heteroatoms, preferably wherein the heteroatoms are one or more selected from the group consisting of O, N, S, and Si;
R₃ and R₄ are the same or different and each independently a hydrogen, alkyl, cycloalkyl, aryl, alkaryl, or aralkyl radical, which may contain one or more heteroatoms, preferably wherein the heteroatoms are one or more selected from the group consisting of O, N, S, and Si; and,
A is a divalent organic radical, which may be an alkyl radical; one or more heteroatoms selected from the group consisting of O, NR₇, S and SiR₈R₉; or, an alkyl radical containing one or more heteroatoms, preferably wherein the heteroatoms are one or more selected from the group consisting of O, NR₇, S, and SiR₈R₉.

3. The rubber composition according to claim 2, wherein the silane-containing carboxyl group is present as a carboxylate of the Formula (II): 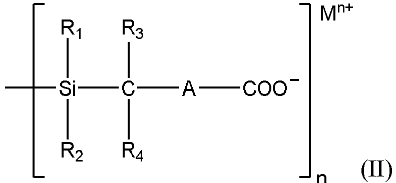 wherein:
R₁ and R₂ are the same or different and each independently a hydrogen, alkyl, alkoxy, cycloalkyl, cycloalkoxy, aryl, aryloxy, alkylaryl, alkylaryloxy, aralkyl, or aralkoxy radical, which may contain one or more heteroatoms, preferably wherein the heteroatoms are one or more selected from the group consisting of O, N, S, and Si;
R₃ and R₄ are the same or different and each independently a hydrogen, alkyl, cycloalkyl, aryl, alkaryl, or aralkyl radical, which may contain one or more heteroatoms, preferably wherein the heteroatoms are one or more selected from the group consisting of O, N, S, and Si; and,
A is a divalent organic radical, which may be an alkyl radical; one or more heteroatoms selected from the group consisting of O, NR₇, S and SiR₈R₉; or, an alkyl radical containing one or more heteroatoms, preferably wherein the heteroatoms are one or more selected from the group consisting of O, NR₇, S, and SiR₈R₉; and,
M is a metal or semi-metal of valency 1 to 4, preferably Li, Na, K, Mg, Ca, Zn, Fe, Co, Ni, Al, Nd, Ti, Sn, Si, Zr, V, Mo or W.
n is an integer from 1 to 4, preferably 1.

4. The rubber composition according to any preceding claim, wherein the end-group functionalised SSBR copolymer is obtainable by reaction of an SSBR copolymer with one or more functionalising reagents in the form of silalactones, preferably wherein the silalactones are compounds of the Formula (III): 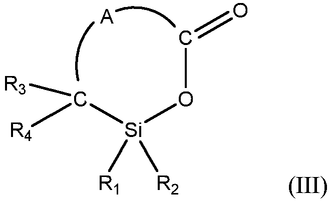 wherein
R₁ and R₂ are the same or different and each independently a hydrogen, alkyl, alkoxy, cycloalkyl, cycloalkoxy, aryl, aryloxy, alkylaryl, alkylaryloxy, aralkyl, or aralkoxy radical, which may contain one or more heteroatoms, preferably wherein the heteroatoms are one or more selected from the group consisting of O, N, S, and Si;
R₃ and R₄ are the same or different and each independently a hydrogen, alkyl, cycloalkyl, aryl, alkaryl, or aralkyl radical, which may contain one or more heteroatoms, preferably wherein the heteroatoms are one or more selected from the group consisting of O, N, S, and Si; and,
A is a divalent organic radical, which may be an alkyl radical; one or more heteroatoms selected from the group consisting of O, NR₇, S and SiR₈R₉; or, an alkyl radical containing one or more heteroatoms, preferably wherein the heteroatoms are one or more selected from the group consisting of O, NR₇, S, and SiR₈R₉.

5. The rubber composition according to any of claims 2 to 4, wherein the silane-containing carboxyl group is bonded to the SSBR copolymer via one or more divalent structural elements of the Formula (V): 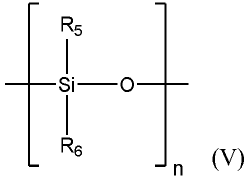 preferably wherein the divalent structural elements are derived from cyclosiloxanes of the Formula (IV): 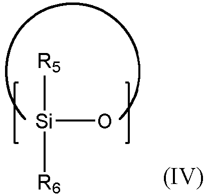 wherein
n is an integer from 3 to 6;
R₅, R₆ are the same or different and are each independently a hydrogen, alkyl, cycloalkyl, aryl, alkaryl, or aralkyl radical; which may contain one or more heteroatoms, preferably wherein the heteroatoms are O, N, S or Si, more preferably wherein the divalent structural elements are derived from one or more cyclosiloxanes selected from the group consisting of hexamethylcyclotrisiloxane, octamethylcyclotetrasiloxane, decamethylcyclopentasiloxane, and dodecamethylcyclohexasiloxane.

6. The rubber composition according to any preceding claim, wherein the functionalised silica is functionalised at its surface with one or more polycarboxylic acids, preferably wherein the one or more polycarboxylic acids are one or more selected from the group consisting of adipic acid, succinic acid, ethylsuccinic acid, glutaric acid, methylglutaric acid, oxalic acid, and citric acid.

7. The rubber composition according to any preceding claim, wherein the functionalised silica has a carbon content of at least 0.15% by weight, preferably at least 0.20% by weight, more preferably at least 0.25% by weight, more preferably at least 0.30% by weight.

8. The rubber composition according to any preceding claim, wherein the functionalised silica has an object size distribution width ratio of at least 0.94, preferably at least 0.98.

9. The rubber composition according to any preceding claim, wherein the functionalised silica has a pore volume distribution ratio of at least 0.66, preferably at least 0.68.

10. The rubber composition according to any preceding claim, wherein the pH of the functionalised silica is from 2.5 to 7, preferably from 2.5 to 5, more preferably from 3 to 4.5.

11. The rubber composition according to any preceding claim comprising:
10.5 to 100 parts by weight based on 100 parts by weight of the rubber component of the end-group functionalised SSBR copolymer, preferably 40 to 90 parts by weight, preferably 50 to 80 parts by weight, preferably 55 to 75 parts by weight; and,
20 to 200 parts by weight based on 100 parts by weight of the rubber component of a functionalised silica, preferably 50 to 100 parts by weight, preferably, 65 to 85 parts by weight, preferably 70 to 75 parts by weight.

12. The rubber composition according to any preceding claim, wherein the ratio of the amount of the functionalised silica in parts per hundred of the rubber component to the amount of the end-group functionalised SSBR copolymer in parts per hundred of the rubber component is from 0.5:1 to 2:1, preferably from 0.75:1 to 1.50:1, preferably from 0.9:1 to 1.40:1, preferably from 0.95:1 to 1.35:1, more preferably from 0.95:1 to 1.30:1.

13. The rubber composition according to any preceding claim, wherein the rubber composition is compounded.

14. A rubber product comprising the rubber composition according to any preceding claim, wherein the rubber composition is vulcanised.

15. A tyre comprising the rubber composition according to any of claims 1 to 13 or the rubber product of claim 14.

## Patentansprüche

1. Kautschukzusammensetzung, umfassend:
eine Kautschukkomponente, umfassend ein endgruppenfunktionalisiertes, lösungspolymerisiertes Styrol-Butadien-(SSBR)-Copolymer, wobei das endgruppenfunktionalisierte SSBR-Copolymer terminale Carboxylgruppen umfasst; und
eine funktionalisierte Kieselsäure, wobei die funktionalisierte Kieselsäure eine mit einer oder mehreren Carboxylgruppen funktionalisierte Kieselsäure ist, wobei die funktionalisierte Kieselsäure Folgendes aufweist:
- eine BET-spezifische Oberfläche, gemessen gemäß dem in der Beschreibung offenbarten Verfahren, von 250 bis 310 m²/g;
- eine CTAB-spezifische Oberfläche, gemessen gemäß ASTM D6845, von 230 bis 285 m²/g;
- einen Kohlenstoffgehalt von mindestens 0,10 Gew.-% der funktionalisierten Kieselsäure;
- ein Objektgrößenverteilungsbreitenverhältnis (Ld) von mindestens 0,91,
wobei das Objektgrößenverteilungsbreitenverhältnis (Ld) gemäß dem in der Beschreibung offenbarten Verfahren gemessen wird und dem Verhältnis (d84-d16)/d50 entspricht, wobei dn die Größe ist, für die n % der Partikel kleiner als diese Größe sind; und
- ein Porenvolumenverteilungsverhältnis von mindestens 0,65,
wobei das Porenvolumenverteilungsverhältnis gemäß dem in der Beschreibung offenbarten Verfahren gemessen wird und das Verhältnis V(d5 - d50)/V(d5 - d100) ist, wobei V(d5 - d50) das Porenvolumen darstellt, das aus Poren mit einem Durchmesser zwischen d5 und d50 besteht, und V(d5 - d100) das Porenvolumen darstellt, das aus Poren mit einem Durchmesser zwischen d5 und d100 besteht, wobei dn hier der Porendurchmesser ist, für den n % der Gesamtoberfläche aller Poren durch die Poren mit einem Durchmesser, der größer als dieser Durchmesser ist, bereitgestellt werden.

2. Kautschukzusammensetzung nach Anspruch 1, wobei das endgruppenfunktionalisierte SSBR-Copolymer terminale silanhaltige Carboxylgruppen der Formel (I) umfasst: 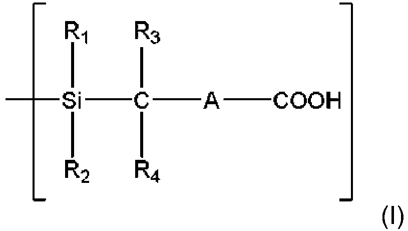 wobei:
R₁ und R₂ gleich oder verschieden sind und jeweils unabhängig voneinander für einen Wasserstoff-, Alkyl-, Alkoxy-, Cycloalkyl-, Cycloalkoxy-, Aryl-, Aryloxy-, Alkylaryl-, Alkylaryloxy-, Aralkyl- oder Aralkoxyrest stehen, der ein oder mehrere Heteroatome enthalten kann, wobei die Heteroatome bevorzugt eines oder mehrere ausgewählt aus der Gruppe, bestehend aus O, N, S und Si, sind;
R₃ und R₄ gleich oder verschieden sind und jeweils unabhängig voneinander für einen Wasserstoff-, Alkyl-, Cycloalkyl-, Aryl-, Alkaryl- oder Aralkylrest stehen, der ein oder mehrere Heteroatome enthalten kann, wobei die Heteroatome bevorzugt eines oder mehrere ausgewählt aus der Gruppe, bestehend aus O, N, S und Si, sind; und
A ein zweiwertiger organischer Rest ist, der ein Alkylrest sein kann; ein oder mehrere Heteroatome, ausgewählt aus der Gruppe, bestehend aus O, NR₇, S und SiR₈R₉; oder einen Alkylrest, der ein oder mehrere Heteroatome enthält, wobei die Heteroatome bevorzugt eines oder mehrere ausgewählt aus der Gruppe, bestehend aus O, NR₇, S und SiR₈R₉, sind.

3. Kautschukzusammensetzung nach Anspruch 2, wobei die silanhaltige Carboxylgruppe als ein Carboxylat der Formel (II) vorliegt: 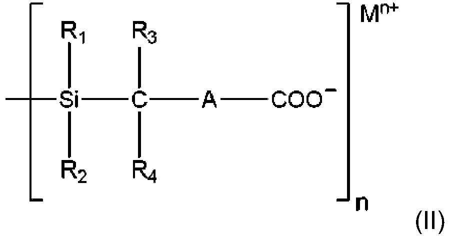 wobei:
R₁ und R₂ gleich oder verschieden sind und jeweils unabhängig voneinander für einen Wasserstoff-, Alkyl-, Alkoxy-, Cycloalkyl-, Cycloalkoxy-, Aryl-, Aryloxy-, Alkylaryl-, Alkylaryloxy-, Aralkyl- oder Aralkoxyrest stehen, der ein oder mehrere Heteroatome enthalten kann, wobei die Heteroatome bevorzugt eines oder mehrere ausgewählt aus der Gruppe, bestehend aus O, N, S und Si, sind;
R₃ und R₄ gleich oder verschieden sind und jeweils unabhängig voneinander für einen Wasserstoff-, Alkyl-, Cycloalkyl-, Aryl-, Alkaryl- oder Aralkylrest stehen, der ein oder mehrere Heteroatome enthalten kann, wobei die Heteroatome bevorzugt eines oder mehrere ausgewählt aus der Gruppe, bestehend aus O, N, S und Si, sind; und
A ein zweiwertiger organischer Rest ist, der ein Alkylrest sein kann; ein oder mehrere Heteroatome, ausgewählt aus der Gruppe, bestehend aus O, NR₇, S und SiR₈R₉; oder einen Alkylrest, der ein oder mehrere Heteroatome enthält, wobei die Heteroatome bevorzugt eines oder mehrere ausgewählt aus der Gruppe, bestehend aus O, NR₇, S und SiR₈R₉, sind; und
M ein Metall oder Halbmetall der Wertigkeit 1 bis 4 ist, bevorzugt Li, Na, K, Mg, Ca, Zn, Fe, Co, Ni, Al, Nd, Ti, Sn, Si, Zr, V, Mo oder W;
n eine ganze Zahl von 1 bis 4 ist, bevorzugt 1.

4. Kautschukzusammensetzung nach einem der vorstehenden Ansprüche, wobei der endgruppenfunktionalisierte SSBR-Copolymer durch Reaktion eines SSBR-Copolymers mit einem oder mehreren Funktionalisierungsreagenzien in Form von Silalactonen erhältlich ist, wobei es sich bei den Silalactonen bevorzugt um Verbindungen der Formel (III) handelt: 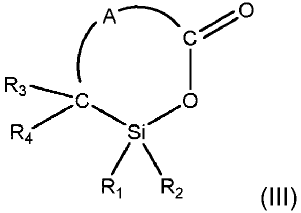 wobei
R₁ und R₂ gleich oder verschieden sind und jeweils unabhängig voneinander für einen Wasserstoff-, Alkyl-, Alkoxy-, Cycloalkyl-, Cycloalkoxy-, Aryl-, Aryloxy-, Alkylaryl-, Alkylaryloxy-, Aralkyl- oder Aralkoxyrest stehen, der ein oder mehrere Heteroatome enthalten kann, wobei die Heteroatome bevorzugt eines oder mehrere ausgewählt aus der Gruppe, bestehend aus O, N, S und Si, sind;
R₃ und R₄ gleich oder verschieden sind und jeweils unabhängig voneinander für einen Wasserstoff-, Alkyl-, Cycloalkyl-, Aryl-, Alkaryl- oder Aralkylrest stehen, der ein oder mehrere Heteroatome enthalten kann, wobei die Heteroatome bevorzugt eines oder mehrere ausgewählt aus der Gruppe, bestehend aus O, N, S und Si, sind; und
A ein zweiwertiger organischer Rest ist, der ein Alkylrest sein kann; ein oder mehrere Heteroatome, ausgewählt aus der Gruppe, bestehend aus O, NR₇, S und SiR₈R₉; oder einen Alkylrest, der ein oder mehrere Heteroatome enthält, wobei die Heteroatome bevorzugt eines oder mehrere ausgewählt aus der Gruppe, bestehend aus O, NR₇, S und SiR₈R₉, sind.

5. Kautschukzusammensetzung nach einem der Ansprüche 2 bis 4, wobei die silanhaltige Carboxylgruppe über ein oder mehrere zweiwertige Strukturelemente der Formel (V) an das SSBR-Copolymer gebunden ist: 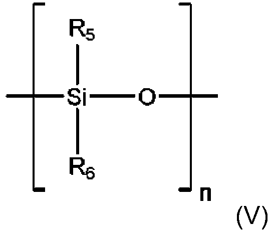 bevorzugt wobei die zweiwertigen Strukturelemente von Cyclosiloxanen der Formel (IV) abgeleitet sind: 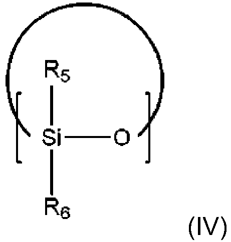 wobei
n eine ganze Zahl von 3 bis 6 ist;
R₅, R₆ gleich oder verschieden sind und jeweils unabhängig voneinander einen Wasserstoff-, Alkyl-, Cycloalkyl-, Aryl-, Alkaryl- oder Aralkylrest bedeuten; die ein oder mehrere Heteroatome enthalten können, wobei es sich bei den Heteroatomen bevorzugt um O, N, S oder Si handelt, wobei die zweiwertigen Strukturelemente besonders bevorzugt von einem oder mehreren Cyclosiloxanen abgeleitet sind, die aus der Gruppe ausgewählt sind, die aus Hexamethylcyclotrisiloxan, Octamethylcyclotetrasiloxan, Decamethylcyclopentasiloxan und Dodecamethylcyclohexasiloxan besteht.

6. Kautschukzusammensetzung nach einem der vorstehenden Ansprüche, wobei die funktionalisierte Kieselsäure an ihrer Oberfläche mit einer oder mehreren Polycarbonsäuren funktionalisiert ist, wobei es sich bei der einen oder den mehreren Polycarbonsäuren bevorzugt um eine oder mehrere handelt, die aus der Gruppe ausgewählt sind, die aus Adipinsäure, Bernsteinsäure, Ethylbernsteinsäure, Glutarsäure, Methylglutarsäure, Oxalsäure und Citronensäure besteht.

7. Kautschukzusammensetzung nach einem der vorstehenden Ansprüche, wobei die funktionalisierte Kieselsäure einen Kohlenstoffgehalt von mindestens 0,15 Gew.-%, bevorzugt mindestens 0,20 Gew.-%, besonders bevorzugt mindestens 0,25 Gew.-%, mehr bevorzugt mindestens 0,30 Gew.-% aufweist.

8. Kautschukzusammensetzung nach einem der vorstehenden Ansprüche, wobei die funktionalisierte Kieselsäure ein Breitenverhältnis der Objektgrößenverteilung von mindestens 0,94, bevorzugt mindestens 0,98, aufweist.

9. Kautschukzusammensetzung nach einem der vorstehenden Ansprüche, wobei die funktionalisierte Kieselsäure ein Porenvolumenverteilungsverhältnis von mindestens 0,66, bevorzugt mindestens 0,68, aufweist.

10. Kautschukzusammensetzung nach einem der vorstehenden Ansprüche, wobei der pH-Wert der funktionalisierten Kieselsäure von 2,5 bis 7, bevorzugt von 2,5 bis 5, besonders bevorzugt von 3 bis 4,5, beträgt.

11. Kautschukzusammensetzung nach einem der vorstehenden Ansprüche, umfassend:
10,5 bis 100 Gewichtsteile, bezogen auf 100 Gewichtsteile der Kautschukkomponente des endgruppenfunktionalisierten SSBR-Copolymers, bevorzugt 40 bis 90 Gewichtsteile, bevorzugt 50 bis 80 Gewichtsteile, bevorzugt 55 bis 75 Gewichtsteile; und
20 bis 200 Gewichtsteile, bezogen auf 100 Gewichtsteile der Kautschukkomponente einer funktionalisierten Kieselsäure, bevorzugt 50 bis 100 Gewichtsteile, bevorzugt 65 bis 85 Gewichtsteile, bevorzugt 70 bis 75 Gewichtsteile.

12. Kautschukzusammensetzung nach einem der vorstehenden Ansprüche, wobei das Verhältnis der Menge der funktionalisierten Kieselsäure in Teilen pro hundert Teilen der Kautschukkomponente zur Menge des endgruppenfunktionalisierten SSBR-Copolymers in Teilen pro hundert Teilen der Kautschukkomponente von 0,5:1 bis 2:1, bevorzugt von 0,75:1 bis 1,50:1, bevorzugt von 0,9:1 bis 1,40:1, bevorzugt von 0,95:1 bis 1,35:1, besonders bevorzugt von 0,95:1 bis 1,30:1, beträgt.

13. Kautschukzusammensetzung nach einem der vorstehenden Ansprüche, wobei die Kautschukzusammensetzung kompundiert ist.

14. Kautschukprodukt, das die Kautschukzusammensetzung nach einem der vorstehenden Ansprüche umfasst, wobei die Kautschukzusammensetzung vulkanisiert ist.

15. Reifen, der die Kautschukzusammensetzung nach einem der Ansprüche 1 bis 13 oder das Kautschukprodukt nach Anspruch 14 umfasst.

## Revendications

1. Composition de caoutchouc comprenant :
un composant de caoutchouc comprenant un copolymère de styrène-butadiène polymérisé en solution (SSBR) fonctionnalisé en groupe terminal, dans laquelle le copolymère SSBR fonctionnalisé en groupe terminal comprend des groupes carboxyle terminaux ; et
une silice fonctionnalisée, dans laquelle la silice fonctionnalisée est une silice fonctionnalisée avec un ou plusieurs groupes carboxyle, la silice fonctionnalisée ayant :
- une surface spécifique BET mesurée selon le procédé décrit dans la description de 250 à 310 m²/g ;
- une surface spécifique CTAB mesurée selon la norme ASTM D6845 de 230 à 285 m²/g
- une teneur en carbone d'au moins 0,10 % en poids de la silice fonctionnalisée ;
- un rapport de largeur de distribution de taille d'objets (Ld) d'au moins 0,91,
dans laquelle ledit rapport de largeur de distribution de taille d'objets (Ld) est mesuré selon le procédé décrit dans la description et correspond au rapport (d84 - d16)/d50, dans lequel dn est la taille pour laquelle n % des particules sont plus petites que cette taille ; et,
- un rapport de distribution de volume poreux d'au moins 0,65,
dans laquelle ledit rapport de distribution de volume poreux est mesuré selon le procédé décrit dans la description et est le rapport V(d5 - d50)/V(d5 - d100), dans lequel V(d5 - d50) représente le volume poreux constitué de pores d'un diamètre compris entre d5 et d50, et V(d5 - d100) représente le volume poreux constitué de pores d'un diamètre compris entre d5 et d100, dn étant ici le diamètre de pore pour lequel n % de la surface totale de tous les pores est fournie par les pores ayant un diamètre supérieur à ce diamètre.

2. Composition de caoutchouc selon la revendication 1, dans laquelle le copolymère SSBR fonctionnalisé en groupe terminal comprend des groupes carboxyle terminaux contenant du silane de formule (I) : 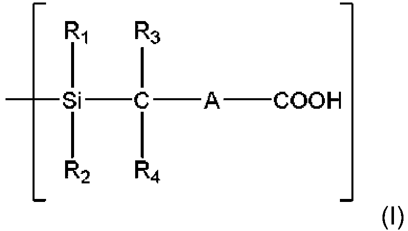 dans laquelle :
R₁ et R₂ sont identiques ou différents et sont chacun indépendamment un hydrogène, un radical alkyle, alcoxy, cycloalkyle, cycloalcoxy, aryle, aryloxy, alkylaryle, alkylaryloxy, aralkyle ou aralcoxy, qui peuvent contenir un ou plusieurs hétéroatomes, de préférence dans laquelle les hétéroatomes sont un ou plusieurs choisis dans le groupe constitué de O, N, S et Si ;
R₃ et R₄ sont identiques ou différents et sont chacun indépendamment un hydrogène, un radical alkyle, cycloalkyle, aryle, alcaryle ou aralkyle, qui peuvent contenir un ou plusieurs hétéroatomes, de préférence dans laquelle les hétéroatomes sont un ou plusieurs choisis dans le groupe constitué de O, N, S et Si ; et
A est un radical organique divalent, qui peut être un radical alkyle ; un ou plusieurs hétéroatomes choisis dans le groupe constitué de O, NR₇, S et SiR₈R₉ ; ou un radical alkyle contenant un ou plusieurs hétéroatomes, de préférence dans laquelle les hétéroatomes sont un ou plusieurs choisis dans le groupe constitué de O, NR₇, S et SiR₈R₉.

3. Composition de caoutchouc selon la revendication 2, dans laquelle le groupe carboxyle contenant du silane est présent sous la forme d'un carboxylate de formule (II) : 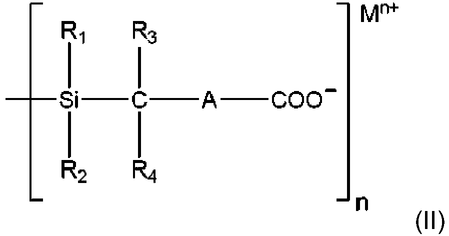 dans laquelle :
R₁ et R₂ sont identiques ou différents et sont chacun indépendamment un hydrogène, un radical alkyle, alcoxy, cycloalkyle, cycloalcoxy, aryle, aryloxy, alkylaryle, alkylaryloxy, aralkyle ou aralcoxy, qui peuvent contenir un ou plusieurs hétéroatomes, de préférence dans laquelle les hétéroatomes sont un ou plusieurs choisis dans le groupe constitué de O, N, S et Si ;
R₃ et R₄ sont identiques ou différents et sont chacun indépendamment un hydrogène, un radical alkyle, cycloalkyle, aryle, alcaryle ou aralkyle, qui peuvent contenir un ou plusieurs hétéroatomes, de préférence dans laquelle les hétéroatomes sont un ou plusieurs choisis dans le groupe constitué de O, N, S et Si ; et
A est un radical organique divalent, qui peut être un radical alkyle ; un ou plusieurs hétéroatomes choisis dans le groupe constitué de O, NR₇, S et SiR₈R₉ ; ou un radical alkyle contenant un ou plusieurs hétéroatomes, de préférence dans laquelle les hétéroatomes sont un ou plusieurs choisis dans le groupe constitué de O, NR₇, S et SiR₈R₉ ; et
M est un métal ou un semi-métal de valence 1 à 4, de préférence Li, Na, K, Mg, Ca, Zn, Fe, Co, Ni, AI, Nd, Ti, Sn, Si, Zr, V, Mo ou W.
n est un nombre entier allant de 1 à 4, de préférence 1.

4. Composition de caoutchouc selon l'une quelconque des revendications précédentes, dans laquelle le copolymère SSBR fonctionnalisé en groupe terminal peut être obtenu par réaction d'un copolymère SSBR avec un ou plusieurs réactifs de fonctionnalisation sous la forme de silalactones, de préférence dans laquelle les silalactones sont des composés de la formule (III) : 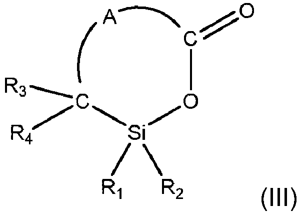 dans laquelle
R₁ et R₂ sont identiques ou différents et sont chacun indépendamment un hydrogène, un radical alkyle, alcoxy, cycloalkyle, cycloalcoxy, aryle, aryloxy, alkylaryle, alkylaryloxy, aralkyle ou aralcoxy, qui peuvent contenir un ou plusieurs hétéroatomes, de préférence dans laquelle les hétéroatomes sont un ou plusieurs choisis dans le groupe constitué de O, N, S et Si ;
R₃ et R₄ sont identiques ou différents et sont chacun indépendamment un hydrogène, un radical alkyle, cycloalkyle, aryle, alcaryle ou aralkyle, qui peuvent contenir un ou plusieurs hétéroatomes, de préférence dans laquelle les hétéroatomes sont un ou plusieurs choisis dans le groupe constitué de O, N, S et Si ; et,
A est un radical organique divalent, qui peut être un radical alkyle ; un ou plusieurs hétéroatomes choisis dans le groupe constitué de O, NR₇, S et SiR₈R₉ ; ou un radical alkyle contenant un ou plusieurs hétéroatomes, de préférence dans lequel les hétéroatomes sont un ou plusieurs choisis dans le groupe constitué de O, NR₇, S et SiR₈R₉.

5. Composition de caoutchouc selon l'une quelconque des revendications 2 à 4, dans laquelle le groupe carboxyle contenant du silane est lié au copolymère SSBR par l'intermédiaire d'un ou plusieurs éléments structuraux divalents de formule (V) : 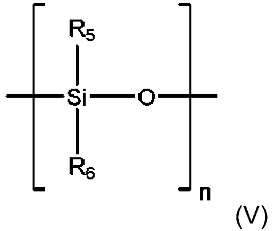 de préférence dans laquelle les éléments structuraux divalents sont dérivés de cyclosiloxanes de formule (IV) : 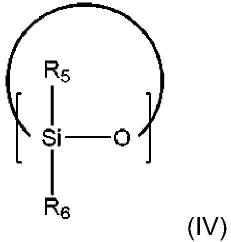 dans laquelle
n est un nombre entier allant de 3 à 6 ;
R₅, R₆ sont identiques ou différents et sont chacun indépendamment un hydrogène, un radical alkyle, cycloalkyle, aryle, alcaryle ou aralkyle ; qui peuvent contenir un ou plusieurs hétéroatomes, de préférence dans laquelle les hétéroatomes sont O, N, S ou Si, plus préférablement dans lequel les éléments structuraux divalents sont dérivés d'un ou plusieurs cyclosiloxanes choisis dans le groupe constitué d'hexaméthylcyclotrisiloxane, octaméthylcyclotétrasiloxane, décaméthylcyclopentasiloxane et dodécaméthylcyclohexasiloxane.

6. Composition de caoutchouc selon l'une quelconque des revendications précédentes, dans laquelle la silice fonctionnalisée est fonctionnalisée à sa surface avec un ou plusieurs acides polycarboxyliques, de préférence dans laquelle le ou les acides polycarboxyliques sont un ou plusieurs choisis dans le groupe constitué d'acide adipique, acide succinique, acide éthylsuccinique, acide glutarique, acide méthylglutarique, acide oxalique et acide citrique.

7. Composition de caoutchouc selon l'une quelconque des revendications précédentes, dans laquelle la silice fonctionnalisée a une teneur en carbone d'au moins 0,15 % en poids, de préférence d'au moins 0,20 % en poids, plus préférablement d'au moins 0,25 % en poids, plus préférablement d'au moins 0,30 % en poids.

8. Composition de caoutchouc selon l'une quelconque des revendications précédentes, dans laquelle la silice fonctionnalisée a un rapport de largeur de distribution de taille d'objets d'au moins 0,94, de préférence d'au moins 0,98.

9. Composition de caoutchouc selon l'une quelconque des revendications précédentes, dans laquelle la silice fonctionnalisée a un rapport de distribution de volume poreux d'au moins 0,66, de préférence d'au moins 0,68.

10. Composition de caoutchouc selon l'une quelconque des revendications précédentes, dans laquelle le pH de la silice fonctionnalisée est de 2,5 à 7, de préférence de 2,5 à 5, plus préférablement de 3 à 4,5.

11. Composition de caoutchouc selon l'une quelconque des revendications précédentes comprenant :
10,5 à 100 parties en poids, sur la base de 100 parties en poids du composant de caoutchouc, du copolymère SSBR fonctionnalisé en groupe terminal, de préférence 40 à 90 parties en poids, de préférence 50 à 80 parties en poids, de préférence 55 à 75 parties en poids ; et,
20 à 200 parties en poids, sur la base de 100 parties en poids du composant de caoutchouc, d'une silice fonctionnalisée, de préférence 50 à 100 parties en poids, de préférence 65 à 85 parties en poids, de préférence 70 à 75 parties en poids.

12. Composition de caoutchouc selon l'une quelconque des revendications précédentes, dans laquelle le rapport de la quantité de la silice fonctionnalisée en parties pour cent du composant de caoutchouc à la quantité du copolymère SSBR fonctionnalisé en groupe terminal en parties pour cent du composant de caoutchouc est de 0,5:1 à 2:1, de préférence de 0,75:1 à 1,50:1, de préférence de 0,9:1 à 1,40:1, de préférence de 0,95:1 à 1,35:1, plus préférablement de 0,95:1 à 1,30:1.

13. Composition de caoutchouc selon l'une quelconque des revendications précédentes, dans laquelle la composition de caoutchouc est mélangée.

14. Produit en caoutchouc comprenant la composition de caoutchouc selon l'une quelconque des revendications précédentes, dans lequel la composition de caoutchouc est vulcanisée.

15. Pneumatique comprenant la composition de caoutchouc selon l'une quelconque des revendications 1 à 13 ou le produit en caoutchouc selon la revendication 14.
